(19) Europäisches Patentamt
European Patent Office
Office européen des brevets

(11) EP 3 480 630 A1

(12) EUROPEAN PATENT APPLICATION
published in accordance with Art. 153(4) EPC

(43) Date of publication:
08.05.2019 Bulletin 2019/19

(51) Int Cl.:
G01W 1/00 (2006.01)          B60C 19/00 (2006.01)
B60W 40/068 (2012.01)        B60C 23/04 (2006.01)
B60C 23/06 (2006.01)         B60T 8/172 (2006.01)

(21) Application number: 17820296.6

(22) Date of filing: 29.06.2017

(86) International application number:
PCT/JP2017/024014

(87) International publication number:
WO 2018/003942 (04.01.2018 Gazette 2018/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.06.2016  JP 2016131083
30.06.2016  JP 2016131084

(71) Applicant: Bridgestone Corporation
Tokyo 104-8340 (JP)

(72) Inventors:
• HANATSUKA Yasushi
Tokyo 104-8340 (JP)
• GOTO Takato
Tokyo 104-8340 (JP)

(74) Representative: Oxley, Robin John George
Marks & Clerk LLP
15 Fetter Lane
London EC4A 1BW (GB)

(54) ROAD SURFACE STATE DETERMINATION METHOD AND ROAD SURFACE STATE DETERMINATION DEVICE

(57) In order to provide a method for accurately determining the road surface state even when the tire state and external information change, when determining the state of the road surface from the time-varying waveform of vibration of a tire during travel detected by a vibration detection means, in addition to the vibration waveform of the tire, tire state information and external information inputted to the tire are acquired, and a determination parameter for determining the road surface state calculated from the tire vibration waveform is corrected or modified on the basis of the acquired tire state information or external information, and either the road surface state is determined using said corrected or modified determination parameter, or the road surface state is determined from the determination parameter and the state information or external information.

FIG. 5

EP 3 480 630 A1

**Description**

TECHNICAL FIELD

The present invention relates to a method and an apparatus for determining a road surface state during travel.

BACKGROUND ART

Conventionally, as a method for determining a road surface state, there is a method of determining a road surface state during travel on the basis of a value obtained by dividing a vibration waveform of a tire tread during travel detected by an acceleration sensor disposed in an inner liner portion of a tire into a pre-leading region R1 before a peak on the leading side appearing at a leading end, a leading region R2 in which the peak on the leading side is formed, a pre-trailing region R3 between the peak on the leading side and a peak on the trailing side appearing at a trailing end, a trailing region R4 in which the peak on the trailing side is formed, and a post-trailing region R5 after the trailing region R4, performing frequency analysis on the vibration waveform of each region, obtaining a plurality of band values $P_{ij}$ serving as vibration levels of specific frequency bands from obtained frequency spectra, and using these band values $P_{ij}$ in a discriminant function $F(P_{ij})$ that has been obtained in advance is proposed (for example, see Patent Literature 1).
To be noted, the band values $P_{ij}$ described above each represent a band value whose number of region number is i and whose number of frequency band is j.

CITATION LIST

PATENT LITERATURE

Patent Literature 1: Japanese Patent Application Publication No. 2011-242303

SUMMARY OF INVENTION

TECHNICAL PROBLEMS

However, in Patent Literature 1 described above, the fact that the time widths of the regions R1 to R5, the magnitudes of the band values $P_{ij}$, and so forth change depending on a tire state such as tire inner pressure or tire inner temperature, or external information input to the tire such as braking/driving force or lateral force is not taken into consideration, and therefore the determination accuracy of the road surface state is not sufficient.
The present invention has been made in consideration of the conventional problem, and aims to provide a method and an apparatus capable of determining the road surface state with high accuracy even in the case where the tire state or the external information input to the tire has changed.

SOLUTION TO PROBLEMS

The present invention is a road surface state determination method for determining a state of a road surface from a time-varying waveform of vibration of a tire during travel detected by a vibration detection means. The road surface state determination method includes a step of obtaining a vibration waveform of the tire, a step of obtaining state information of the tire, and either one determination step of a first determination step of determining a road surface state from a determination parameter that is obtained from the vibration waveform and is for determining the road surface state, and from the state information, and a second determination step of determining the road surface state, after correcting or changing the determination parameter by using the state information, from the corrected determination parameter.
As described above, since the determination parameter for determining the road surface state is corrected or changed in accordance with the obtained state information of the tire, the determination accuracy of the road surface state can be improved.
In addition, the present invention is a road surface state determination apparatus including a vibration detection means that detects vibration of a tire during travel, a vibration waveform detection means that detects a time-varying waveform of the vibration of the tire, and a road surface state determination means that determines a state of a road surface from the time-varying waveform, wherein a tire state detection means that obtains state information of the tire is provided, and wherein the road surface state determination means determines a road surface state from a determination parameter that is obtained from the vibration waveform and is for determining the road surface state, and from the state information.

By employing such a configuration, a road surface state determination apparatus having high determination accuracy of road surface state can be provided.

In addition, the present invention is a road surface state determination method for determining a state of a road surface from a time-varying waveform of vibration of a tire during travel detected by a vibration detection means. The road surface state determination method includes a step of obtaining a vibration waveform of the tire, a step of obtaining external information input to the tire, and either one determination step of a first determination step of determining a road surface state from a determination parameter that is obtained from the vibration waveform and is for determining the road surface state, and from the external information, and a second determination step of determining the road surface state, after correcting or changing the determination parameter by using the external information, from the corrected determination parameter.

As described above, since the determination parameter for determining the road surface state is corrected or changed in accordance with the obtained external information input to the tire, the determination accuracy of the road surface state can be improved.

To be note, the summary of the invention described above is not a list of all features required for the present invention, and subcombinations of these features can be the invention.

BRIEF DESCRIPTION OF DRAWINGS

Fig. 1 is a diagram illustrating a configuration of a road surface state determination apparatus according to Embodiment 1 of the present invention.
Fig. 2 is a diagram illustrating an example of arrangement of an acceleration sensor.
Fig. 3 is a diagram illustrating an example of a time series waveform of vibration and extraction regions of band values.
Fig. 4 is a diagram illustrating a relationship between band values and tire inner pressure.
Fig. 5 is a flowchart illustrating a road surface state determination method according to Embodiment 1 of the present invention.
Fig. 6 is a diagram illustrating a relationship between suitable frequency bands and tire inner pressure.
Fig. 7 is a diagram illustrating a configuration of a road surface state determination apparatus according to Embodiment 2 of the present invention.
Fig. 8 is a diagram illustrating a method for extracting a time series waveform of tire vibration for each time window.
Fig. 9 is a diagram illustrating an example of a road surface HMM.
Fig. 10 is a diagram illustrating a road surface HMM used for calculation of likelihood.
Fig. 11 is a schematic diagram of a state transition series.
Fig. 12 is a flowchart illustrating a road surface state determination method according to Embodiment 2 of the present invention.
Fig. 13 is a diagram illustrating a configuration of a road surface state determination apparatus according to Embodiment 3.
Fig. 14 is a schematic diagram illustrating an input space.
Fig. 15 is a diagram illustrating DRY road surface feature vectors and feature vectors not of a DRY road surface in an input space.
Fig. 16 is a diagram illustrating a calculation method for a GA kernel of DRY road surface feature vectors and feature vectors not of a DRY road surface.
Fig. 17 is a diagram illustrating a calculation method for a GA kernel of calculated feature vectors and road surface feature vectors.
Fig. 18 is a flowchart illustrating a road surface state determination method according to Embodiment 3 of the present invention.
Fig. 19 is a diagram illustrating a configuration of a road surface state determination apparatus according to Embodiment 4.
Fig. 20 is a diagram illustrating an example of arrangement of an acceleration sensor.
Fig. 21 is a diagram illustrating an example of a time series waveform of vibration and extraction regions of band values.
Fig. 22 is a diagram illustrating a relationship between band values and braking/driving force.
Fig. 23 is a flowchart illustrating a road surface state determination method according to Embodiment 4 of the present invention.
Fig. 24 is a diagram illustrating a relationship between suitable frequency bands and braking/driving force.
Fig. 25 is a diagram illustrating a configuration of a road surface state determination apparatus according to Embodiment 5 of the present invention.

Fig. 26 is a diagram illustrating a method for extracting a time series waveform of tire vibration for each time window.

Fig. 27 is a diagram illustrating an example of a road surface HMM.

Fig. 28 is a diagram illustrating a road surface HMM used for calculation of likelihood.

Fig. 29 is a schematic diagram of a state transition series.

Fig. 30 is a flowchart illustrating a road surface state determination method according to Embodiment 5 of the present invention.

Fig. 31 is a diagram illustrating a configuration of a road surface state determination apparatus according to Embodiment 6.

Fig. 32 is a schematic diagram illustrating an input space.

Fig. 33 is a diagram illustrating DRY road surface feature vectors and feature vectors not of a DRY road surface in an input space.

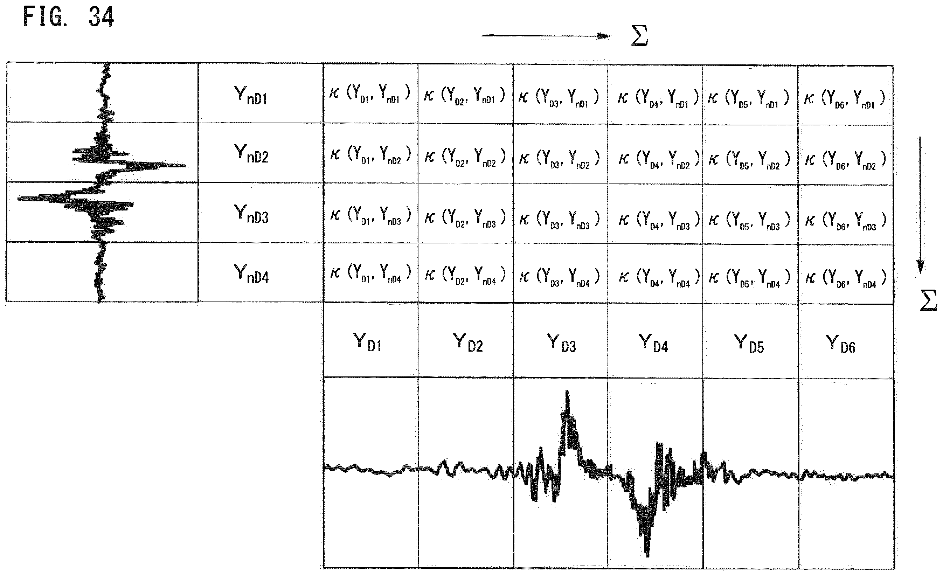

Fig. 34 is a diagram illustrating a calculation method for a GA kernel of DRY road surface feature vectors and feature vectors not of a DRY road surface.

Fig. 35 is a diagram illustrating a calculation method for a GA kernel of calculated feature vectors and road surface feature vectors.

Fig. 36 is a flowchart illustrating a road surface state determination method according to Embodiment 6 of the present invention.

## DESCRIPTION OF EMBODIMENTS

Embodiment 1

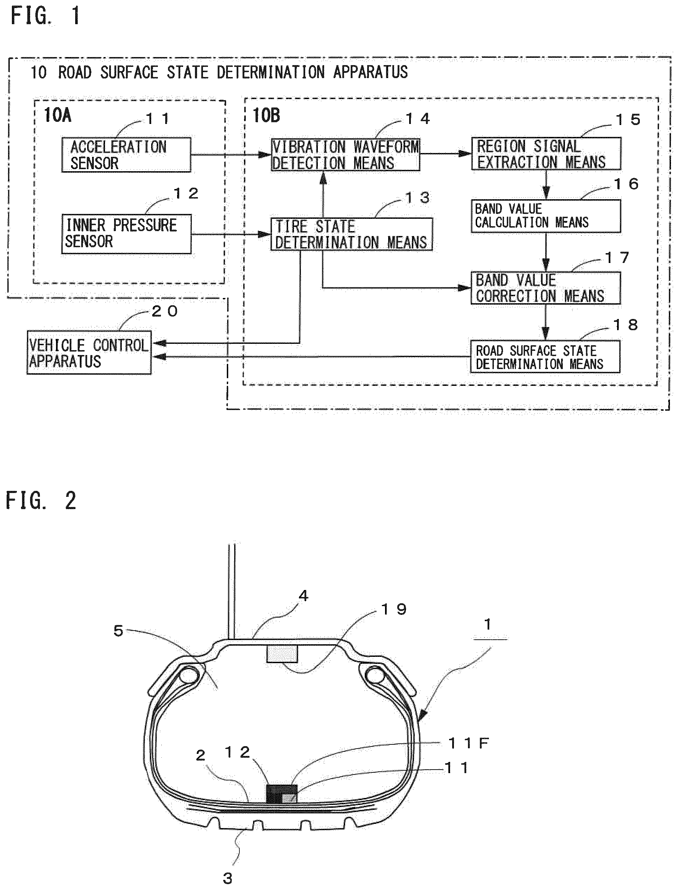

Fig. 1 is a function block diagram of a road surface state determination apparatus 10 according to the present embodiment. In this figure, 11 represents an acceleration sensor serving as a vibration detection means, 12 represents an inner pressure sensor serving as a tire state detection means, 13 represents a tire state determination means, 14 represents a vibration waveform detection means, 15 represents a region signal detection means, 16 represents a band value calculation means, 17 represents a band value correction means, and 18 represents a road surface state determination means.

The acceleration sensor 11 and the inner pressure sensor 12 constitutes a sensor portion 10A, and means from the vibration waveform detection means 13 to the road surface state determination means 18 constitute a storage/calculation portion 10B.

Each means constituting the storage/calculation portion 10B is constituted by, for example, software of a computer and a storage device such as a RAM.

As illustrated in Fig. 2, the acceleration sensor 11 is disposed at the center of an inner liner portion 2 of a tire 1 in a tire width direction such that the detection direction thereof is a tire circumferential direction. As a result of this, the acceleration sensor 11 detects an acceleration rate in the tire circumferential direction input applied from a road surface to a tread 3. Hereinafter, a position of the acceleration sensor 11 (strictly, a position on the surface of the tread 3 disposed on the outside of the acceleration sensor 11 in the radial direction) will be referred to as a measurement point.

For example, output of the acceleration sensor 11 is transmitted by a transmitter 11F to the vibration waveform detection means 14 of an unillustrated storage/calculation portion 10B provided on the vehicle body side. In addition, a determination result of the road surface state determination apparatus 10 is transmitted to a vehicle control apparatus 20 disposed on the vehicle body side.

In addition, the inner pressure sensor 12 is integrally provided with the acceleration sensor 11, and measures a pressure (hereinafter referred to as tire inner pressure) P inside the tire 1. The measured tire inner pressure P is transmitted to the tire state determination means 13 of the storage/calculation portion 10B by the transmitter 11F.

To be noted, a configuration in which the storage/calculation portion 10B is provided on the tire 1 side and the determination result of the road surface state determination apparatus 10 is transmitted to the vehicle control apparatus 20 provided on the vehicle body side may be employed.

The tire state determination means 13 determines, from the tire inner pressure P measured by the inner pressure sensor 12, whether or not the tire 1 is in a state in which determination of the road surface state is possible. Specifically, whether or not the measured tire inner pressure P is within a preset determinable inner pressure range [$P_{min}$, $P_{Max}$], and in the case where $P < P_{min}$ or $P > P_{Max}$ holds, it is determined that it is difficult to determine the road surface state from the detected vibration waveform, a stop instruction signal for stopping detection of the vibration waveform is transmitted to the vibration waveform detection means 14, and an undeterminable signal indicating that the accuracy of the road surface state determined from the detected vibration waveform is low is transmitted to the vehicle control apparatus 20.

In contrast, in the case where the measured tire inner pressure P is within the determinable inner pressure range [$P_{min}$, $P_{Max}$], measurement data of the tire inner pressure P is output to the band value correction means 17.

To be noted, the determinable inner pressure range [$P_{min}$, $P_{Max}$] varies depending on a tire type, and, for example, in the case where a standard inner pressure is $P_0$, it is preferable that $P_{min}$ = (1 - 0.3)$P_0$ and $P_{Max}$ = (1 + 0.3)$P_0$ or $P_{min}$ = $P_0$ - 100 kPa and $P_{Max}$ = $P_0$ + 100 kPa are satisfied.

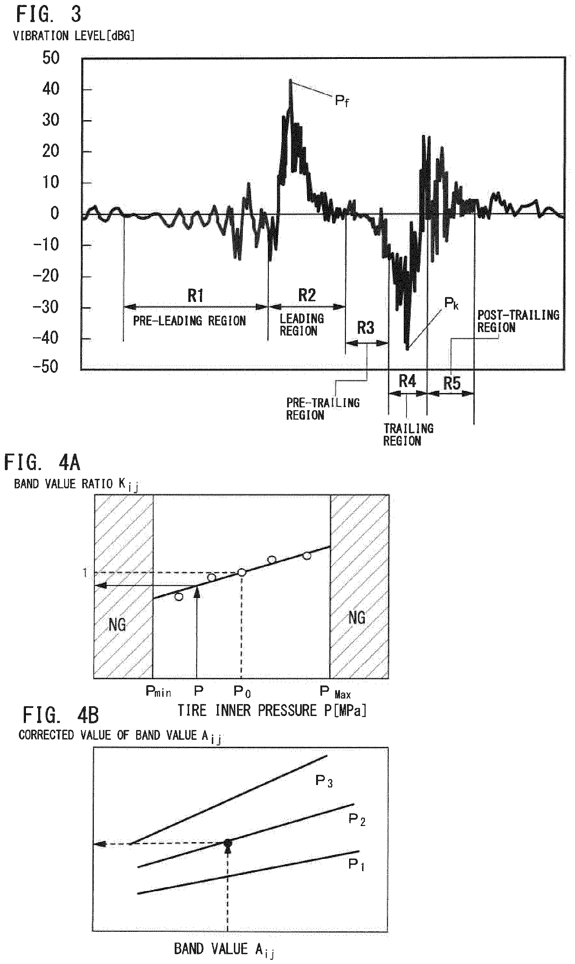

The vibration waveform detection means 14 detects a time series waveform in which vibration in the tire circumferential direction input to the tire 1 during travel, which is an output of the acceleration sensor 11, is arranged in time series. As illustrated in Fig. 3, a peak (positive peak) $P_f$ appearing first in the time series waveform of vibration is a peak generated when a measurement point collides with a road surface, and the position of this peak $P_f$ is a leading point $P_f$. A peak (negative peak) $P_k$ appearing next is a peak generated when the measurement point is separated from the road surface, and the position of this peak $P_k$ is a trailing point.

The region signal extraction means 15 divides the time series waveform detected by the vibration waveform detection means 13 into the pre-leading region R1 before the peak $P_f$ on the leading side, the leading region R2 in which the peak $P_f$ on the leading side is formed, the pre-trailing region R3 which is a region between the peak $P_f$ on the leading side and the peak $P_k$ on the trailing side, the trailing region R4 in which the peak $P_k$ on the trailing side is formed, and the post-trailing region R5 after the trailing region R4, and thus extracts a time series waveform of vibration in each of the regions R1 to R5.

To be noted, in the case where the stop instruction signal has been input from the tire state determination means 13, the extraction operation of the time series waveform is stopped.

The band value calculation means 16 subject the respective time series waveforms of the regions R1 to R5 to band-pass filter, and calculates band values $A_{ij}$, which are magnitudes of vibration components in predetermined frequency regions. To be noted, the affix i indicates the regions R1 to R5 of the time series waveform, and the affix j indicates an extracted frequency region.

For example, $A_{11}$ is a band value selected from a 2 kHz-8 kHz band of the pre-leading region R1, $A_{23}$ is a band value selected from a 4 kHz-10 kHz band of the leading region R2, and $A_{52}$ is a band value selected from a 2 kHz-4 kHz band of the post-trailing region R5.

This band value $A_{ij}$ corresponds to a determination parameter of the present invention.

The band value correction means 17 corrects the band value $A_{ij}$ calculated by the band value calculation means 16 by using data of the tire inner pressure P transmitted from the tire state determination means 13. Specifically, a graph illustrating a relationship between the tire inner pressure P and a band value ratio $K_{ij}$ = $a_{ij}(P)/a_{ij}(P_0)$ as illustrated in Fig. 4 is prepared, and a band value $A_{ij}(P)$ when the inner pressure is P is corrected.

When a corrected band value is expressed as $A_{ij}(P)$, $A_{ij}(P)$ = $K_{ij} \times A_{ij}$ holds.

To be noted, not all the band values $A_{ij}$ increase as the tire inner pressure P increases as illustrated in Fig. 4A. Some band values $A_{ij}$ decrease as the tire inner pressure P increases. Therefore, as described above, regarding a relationship between the band values $A_{ij}$ and the tire inner pressure P, data indicating the relationship between the tire inner pressure P and the band value ratio $K_{ij}$ needs to be prepared for each extraction region Ri and extraction frequency region j.

To be noted, the method for correcting the band values $A_{ij}$ is not limited to the method described above, and, as illustrated in Fig. 4B, a straight line or a curved line indicating a relationship between $A_{ij}$ and $A_{ij}(P)$ may be obtained in advance for each tire inner pressure P, and $A_{ij}(P)$ on the straight line or curved line corresponding to a tire inner pressure P with which $A_{ij}$ has been measured may be used as a corrected value.

The road surface state determination means 18 estimates the road surface state by using a function value fk obtained by using the band value $A_{ij}(P)$ corrected by the band value correction means 17 instead of $A_{ij}$ calculated by the band value calculation means 16 in a plurality of preset discriminant functions Fk($A_{ij}$).

In this example, as the discriminant functions Fk, a discriminant function F1 = $W_{11} \cdot A_{11}$ + $W_{12} \cdot A_{12}$ - K1 for determining whether or not an interposed matter such as water or snow is present on the road surface, F2 = $W_{21} \cdot A_{21}$ + $W_{22} \cdot A_{51}$ - K2 for determining whether or not the road surface is a snow-covered surface, and F3 = $W_{31} \cdot A_{52}$ + $W_{32} \cdot A_{31}$ + $W_{33} \cdot A_{41}$ + $W_{34} \cdot A_{53}$ for determining which of water and snow the interposed matter on the road surface is, that is, which of a deep WET road surface and a deep sherbet-like snow road the road surface is, which the present applicant has proposed in Japanese Patent Application No. 2010-115730 (Patent Literature 1), are used, and whether or not the road surface is a "snow road" and which of a "snow-covered road" and a "shallow sherbet-like snow road" the "snow road" is are determined.

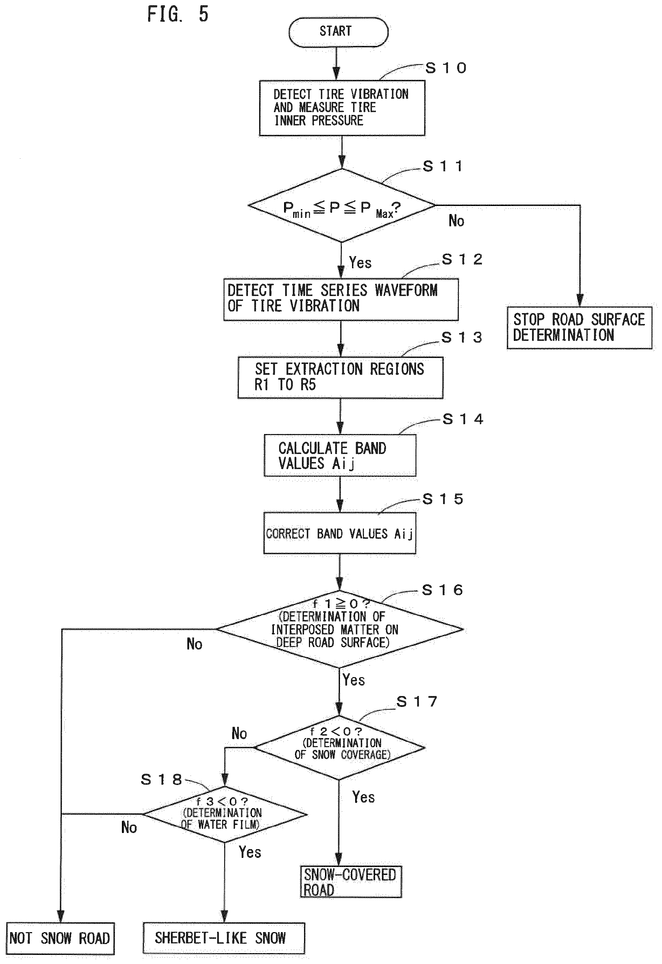

Next, a road surface state determination method according to Embodiment 1 will be described with reference to a flowchart of Fig. 5.

First, vibration in the tire circumferential direction of the tire 1 during travel is detected by the acceleration sensor 11, and the tire inner pressure is measured by the inner pressure sensor 12 (step S10).

Next, whether or not the tire inner pressure P is within the preset determinable inner pressure range [$P_{min}$, $P_{Max}$] is determined from the measured tire inner pressure (step S11).

In the case where the tire inner pressure P is within the determinable inner pressure range [$P_{min}$, $P_{Max}$], the process proceeds to step S12, and a time series waveform in which the vibration in the tire circumferential direction, which is output of the acceleration sensor 11, is arranged in time series is detected. In contrast, in the case where the measured tire inner pressure P satisfies $P < P_{min}$ or $P > P_{Max}$, the road surface determination operation is stopped. To be noted, whether or not the measured tire inner pressure P is within the determinable inner pressure range $[P_{min}, P_{Max}]$ may be determined again after a predetermined time has elapsed.

Next, the detected time series waveform is divided into the pre-leading region R1, the leading region R2, the pre-trailing region R3, the trailing region R4, and the post-trailing region R5 (step S13), and then the band values $A_{ij}$ are calculated from time series waveforms of vibration in the respective regions R1 to R5 (step S14).

The band values $A_{ij}$ are band values whose extraction region of time series waveform is Ri and whose frequency region is $[f_{ja}, f_{jb}]$. For example, $A_{23}$ is a band value of the leading region R2 in a frequency region [4 kHz, 10 kHz].

In the present invention, the calculated band values $A_{ij}$ are corrected by using data of the tire inner pressure P (step S15). To be noted, the correction is performed on each band value $A_{ij}$.

Next, whether or not there is an interposed matter such as water or snow on the road surface is determined (step S16).

Specifically, a discriminant function $F1 = W_{11} \cdot A_{11} + W_{12} \cdot A_{12} - K1$ is set by experimentally obtaining a relationship between a band value $A_{11}$ and a band value $A_{12}$ in various road surface states in advance, and a function value f1 is obtained by using, as a band value $A_{11}$ and a band value $A_{12}$ in this discriminant function F1, a band value $A_{11}(P)$ and a band value $A_{12}(P)$ that have been respectively corrected by using the tire inner pressure P.

In the case where the function value f1 satisfies $f1 \geq 0$, it is determined that an interposed matter such as water or snow is present on the road surface, therefore the process proceeds to step S17, and whether or not the interposed matter on the road surface is soft fresh snow that has piled up is determined. In contrast, in the case where f1 < 0 holds, it is determined that the road surface is "not a snow road".

In step S17, whether or not it is a snow-covered road on which fresh snow has piled up is determined.

Specifically, a discriminant function $F2 = W_{21} \cdot A_{21} + W_{22} \cdot A_{51} - K2$ is set by experimentally obtaining a relationship between a band value $A_{21}$ and a band value $A_{51}$ in various road surface states in advance, and a function value f2 is obtained by using, as a band value $A_{21}$ and a band value $A_{51}$ in this discriminant function F2, a band value $A_{21}(P)$ and a band value $A_{51}(P)$ that have been respectively corrected by using the tire inner pressure P. In the case where f2 < 0 holds, it is determined that the road surface is a snow-covered road.

In contrast, in the case where the function value f2 satisfies $f2 \geq 0$, the process proceeds step S18, and which of water and snow the interposed matter on the road surface is, that is, which of a deep WET road surface and a deep sherbet-like snow road the road surface is is determined.

That is, in step S18, a discriminant function $F3 = W_{31} \cdot A_{52} + W_{32} \cdot A_{31} + W_{33} \cdot A_{41} + W_{34} \cdot A_{53}$ is set for band values $A_{52}$, $A_{31}$, $A_{41}$, and $A_{53}$ in various road surface states, and a function value f3 is obtained by using, as band values $A_{52}$, $A_{531}$, $A_{41}$, and $A_{53}$ in this discriminant function F3, band values $A_{52}(P)$, $A_{31}(P)$, $A_{41}(P)$, and $A_{53}(P)$ that have been respectively corrected by using the tire inner pressure P. In the case where $f3 \geq 0$ holds, determination is made as a deep WET road (not a snow road), and in the case where f3 < 0 holds, the road surface is determined as a sherbet-like snow road.

As described above, in Embodiment 1, the vibration in the tire circumferential direction of the tire 1 during travel is detected by the acceleration sensor 11, the tire inner pressure P is measured by the inner pressure sensor 12, and in the case where the measured tire inner pressure P is within the determinable inner pressure range $[P_{min}, P_{Max}]$, the band values $A_{ij}$ obtained from the time series waveform of the vibration in the tire circumferential direction serving as vibration information are corrected by using the tire inner pressure P, and the road surface state is determined by using the corrected band values $A_{ij}(P)$. Therefore, the determination accuracy of the road surface state can be improved.

In addition, since the determination of the road surface state is stopped in the case where the tire inner pressure P is out of the determinable inner pressure range $[P_{min}, P_{Max}]$, erroneous determination of the road surface state can be prevented.

To be noted, although the tire inner pressure is used as the tire state in Embodiment 1, the tire inner temperature may be used as the tire state, or both of the tire inner pressure and the tire inner temperature may be used as the tire state. Alternatively, a tire outer surface temperature may be added to either one or both of the tire inner pressure and the tire inner temperature.

To be noted, the tire inner temperature may be measured by disposing a temperature sensor 19 on the tire air chamber 5 side of a wheel rim 4 or in the inner liner portion 2 of the tire 1 as illustrated in Fig. 2. In addition, the tire outer surface temperature may be measured by, for example, a temperature sensor disposed in a position opposing the tire 1 in a tire house of an unillustrated vehicle body.

In addition, although the band values $A_{ij}$, which are magnitudes of vibration components of predetermined frequency regions calculated from time series waveforms of the pre-leading region R1, the leading region R2, the pre-trailing region R3, the trailing region R4, and the post-trailing region R5 extracted from a time series waveform, are used as a determination parameter corrected by using the tire state in Embodiment 1 described above, a function value fk of a discriminant function Fk, which is a calculated value calculated from vibration levels of a plurality of predetermined frequency bands, may be used as the determination parameter. Alternatively, $W_{k1}$ (weight level), which is a coefficient of the discriminant function Fk, or a constant $K_k$ may be used as the determination parameter.

The case where the function value fk of the discriminant function Fk is used as the determination parameter corrected by using the tire state corresponds to a first determination step of determining a road surface state by using a determination parameter and state information of the present invention.

In addition, a range of a specific frequency band may be used as the determination parameter.

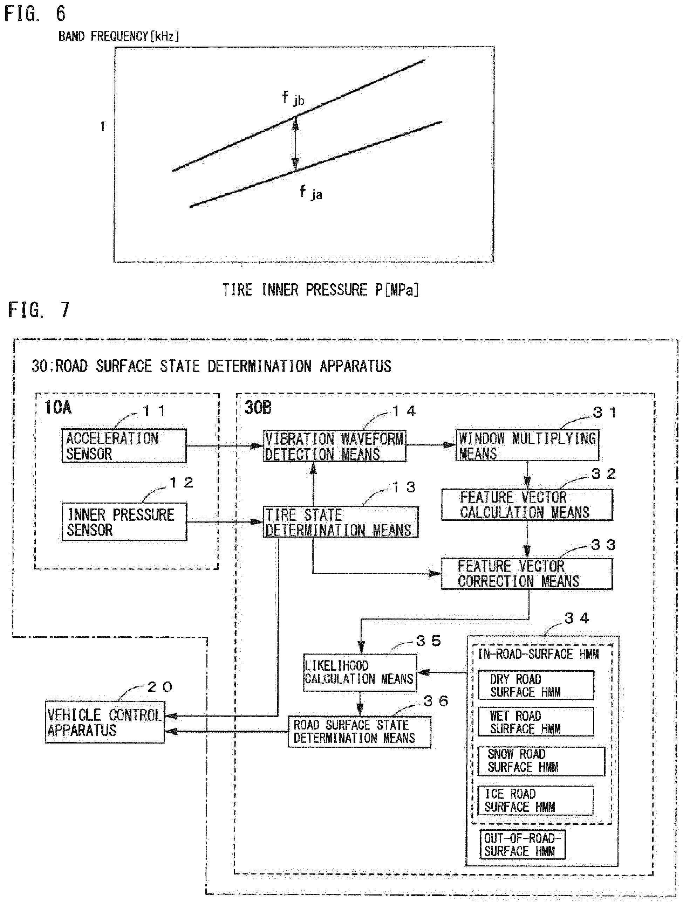

For example, as illustrated in Fig. 6, an upper limit frequency $f_{ja}$ and a lower limit frequency $f_{jb}$ of a specific frequency region, or a region width ($f_{jb}$ - $f_{ja}$) of the specific frequency region changes in accordance with the tire inner pressure P. Therefore, by changing these values in accordance with the tire inner pressure P, the determination accuracy of the road surface state can be improved.

In addition, a time width of a window by which the vibration waveform is to be multiplied may be used as the determination parameter. That is, the position of the peak $P_f$ on the leading side and the position of the peak $P_k$ on the trailing side of the vibration waveform or also an interval position between the peak $P_f$ on the leading side and the peak $P_k$ on the trailing side change in accordance with the tire inner pressure and the tire inner temperature. Therefore, by changing the time width of a window to be multiplied by a vibration waveform, which is a region width of the extraction regions (pre-leading region R1, leading region R2, pre-trailing region R3, trailing region R4, and post-trailing region R5) of the vibration waveform, in accordance with tire information, the determination accuracy of the road surface state can be further improved.

In addition, by simultaneously correcting and changing a plurality of determination parameters, the determination accuracy of the road surface state can be further improved.

Embodiment 2

Fig. 7 is a function block diagram of a road surface state determination apparatus 30 according to Embodiment 2. In this figure, 11 represents an acceleration sensor serving as a vibration detection means, 12 represents an inner pressure sensor serving as a tire state detection means, 13 represents a tire state determination means, 14 represents a vibration waveform detection means, 31 represents a window multiplying means, 32 represents a feature vector calculation means, 33 represents a feature vector correction means, 34 represents a storage means, 35 represents a likelihood calculation means, and 36 represents a road surface state determination means.

The acceleration sensor 11 and the inner pressure sensor 12 constitute a sensor portion 10A, and the tire state determination means 13 means, the vibration waveform detection means 14, and means from the window multiplying means 31 to the road surface state determination means 36 constitute a storage/calculation portion 30B.

Each means constituting the storage/calculation portion 30B is constituted by, for example, software of a computer and a storage device such as a RAM.

To be noted, the acceleration sensor 11, the inner pressure sensor 12, the tire state determination means 13, and the vibration waveform detection means 14 denoted by the same reference signs as in Embodiment 1 are the same as in Embodiment 1, the acceleration sensor 11 detects the vibration in the tire circumferential direction of the tire 1 during travel, and the inner pressure sensor 12 measures the tire inner pressure.

The tire state determination means 13 determines, from data of the measured tire inner pressure, whether or not the measured tire inner pressure P is within the preset determinable inner pressure range [$P_{min}$, $P_{Max}$], and the vibration waveform detection means 14 detects a time series waveform in which vibration in the tire circumferential direction is arranged in time series as illustrated in Fig. 3.

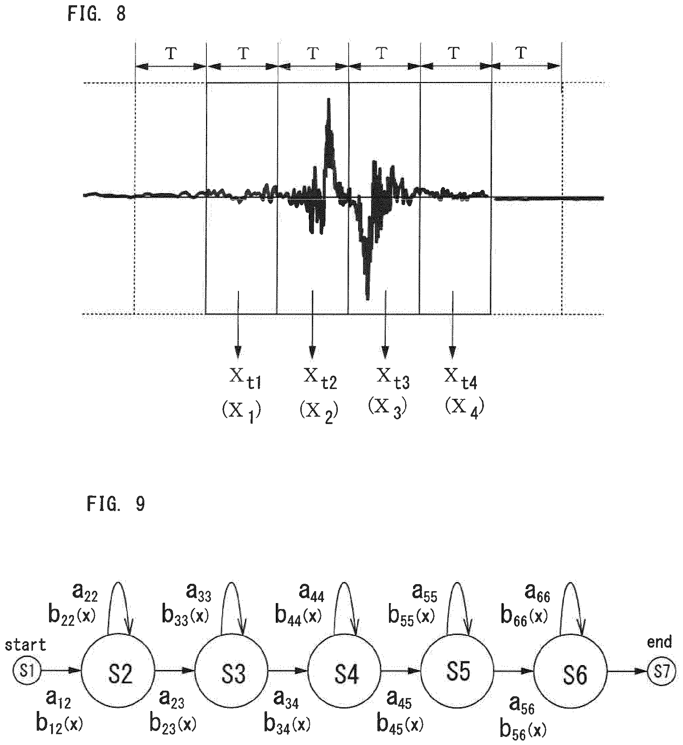

The window multiplying means 31 subjects the time series waveform of the vibration in the tire circumferential direction to window multiplication with a preset time width (time window width), and thus extracts a time series waveform of tire vibration for each time window as illustrated in Fig. 8.

The feature vector calculation means 32 calculates a feature vector $X_t$ for each time series waveform extracted for each time window. In this example, as the feature vector $X_t$, vibration levels (power values of filtered waves) $X_{kt}$ of specific frequency bands extracted obtained by filtering each time series waveform of tire vibration by using k band pass filters BP(k) of frequency regions of $f_{ka}$ to $f_{kb}$. The number of dimensions of a feature vector X is k, and, in this example, since the specific frequency bands are set to six bands of 0 to 0.5 kHz, 0.5 to 1 kHz, 1 to 2 kHz, 2 to 3 kHz, 3 to 4 kHz, and 4 to 5 kHz, k is 6.

Since the feature vector $X_t$ is obtained for each time window, when the total number of time windows is N, the number of feature vectors $X_t$ is also N.

The feature vector correction means 33 corrects, by using the data of the tire inner pressure P transmitted from the tire state determination means 13, N × k power values $X_{kt}$ (hereinafter referred to as power values $X_{kt}$) calculated by the feature vector calculation means 32. The method of correction is similar to that of Embodiment 1. That is, a graph indicating a power value ratio a relationship with $K_k = X_{kt}(P)/X_{kt}(P_0)$ is prepared, power values $X_{kt}$ of the case where the inner pressure is P are corrected, and corrected feature vectors $X_t(P)$ are obtained.

When components of the corrected feature vectors $X_t(P)$ are $X_{kt}(P)$, $X_{kt}(P) = K_k \times X_{kt}$ holds.

The storage means 34 stores a plurality of hidden Markov models (hereinafter referred to as road surface HMMs) constituted for respective road surface states. A road surface HMM is composed of an in-road-surface HMM (road) and an out-of-road-surface HMM (silent). The in-road-surface HMM (road) is constituted by a vibration waveform appearing in a road surface region in the time series waveform of tire vibration, and the out-of-road-surface HMM (silent) is constituted by a waveform in a region without information.

The road surface HMM has seven states $S_1$ to $S_7$ corresponding to the time series waveform of tire vibration as illustrated in Fig. 9, and the states $S_1$ to $S_7$ are each constituted by two kinds of parameters of emission probabilities $b_{ij}(X)$ of the feature vector $X_t$ and transition probabilities $a_{ij}(X)$ between states (i, j = 1 to 7).

In this example, learning of dividing the tire vibration into five states in five states of $S_2$ to $S_6$ excluding the start state $S_1$ and the end state $S_7$ of each road surface HMM is performed to obtain the emission probabilities $b_{ij}(X)$ and the transition states $a_{ij}(X)$ between states of the feature vector X of each road surface HMM.

An emission probability $b_{ij}(X)$ represents the probability of the feature vector X being output when the state transitions from a state $S_i$ to a state $S_j$. The emission probability $b_{ij}(X)$ is assumed to have a mixed normal distribution.

A transition probability $a_{ij}(X)$ represents the probability of the state transitioning from the state $S_i$ to the state $S_j$.

To be noted, in the case where the number of dimensions of the feature vector X is k, the emission probability $b_{ij}$ is set for each of k components $X_k$ of the feature vector X.

In this example, data of time series waveform obtained in advance by driving a vehicle including the tire 1 provided with the acceleration sensor 11 on respective road surfaces of DRY, WET, SNOW, and ICE is used as learning data, and thus five road surface HMMs composed of four in-road-surface HMMs (road) of a DRY road surface HMM, a WET road surface HMM, a SNOW road surface HMM, and an ICE road surface HMM and one out-of-road-surface HMM (silent) are constructed.

The in-road-surface HMM (road) and the out-of-road-surface HMM (silent) both are HMMs having the seven states of S1 to S7 including the start state S1 and the end state S7.

The learning of HMM is performed by a known method such as EM algorithm, Baum-Welch algorithm, and forward-backforward algorithm.

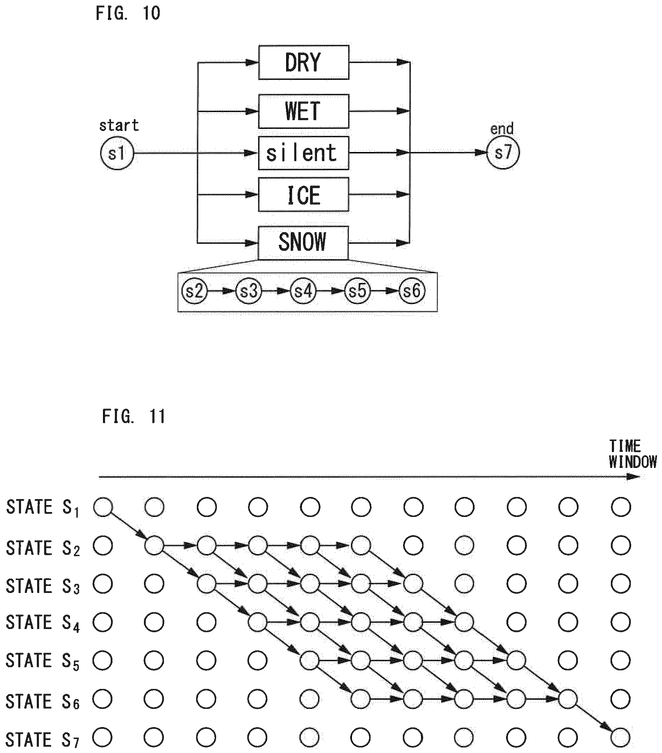

The likelihood calculation means 35 calculates likelihood of a feature vector $X_t(P)$ corrected for each of a plurality of (four herein) road surface HMMs as illustrated in Fig. 10.

Regarding the likelihood, as the present applicants have proposed in Japanese Patent Application No. 2011-140943, first, an emission probability $P(X_t(P))$ is calculated for each time window by using the following formulae (1) and (2). To be noted, $X_t$ represents a corrected feature vector $X_t(P)$ hereinbelow.

[Math. 1]

$$P(X_t) = \prod_{s=1}^{S} \left[ \sum_{m=1}^{M_s} c_{jsm} N(X_{st} \mid \mu_{jsm}, \sigma_{jsm}) \right] \quad \cdots\cdots (1)$$

$$N(X \mid \mu, \sigma) = \frac{1}{\sqrt{(2\pi)^n |\sigma|}} \exp\left[ -\frac{1}{2}(x-\mu)\sigma^{-1}(x-\mu)^{\mathsf{T}} \right] \quad \cdots\cdots (2)$$

X; data series
t; time
S; number of states
$M_s$; number of components in mixed Gauss distribution
$C_{jsm}$; mixture ratio of m-th mixture component
$\mu$; average vector of Gauss distribution
$\sigma$; variance-covariance matrix of Gauss distribution

Since the road surface HMM has 7 states, a transition probability $\pi(X_t)$ can be represented by a $7 \times 7$ matrix. As this transition probability $\pi(X_t)$, the transition probability $a_{ij}(X_t)$ between states of the feature vector $X_t$ obtained by learning of the road surface HMM described above can be used.

Then, an appearance probability $K(X_t)$ for each time window, which is a product of the calculated emission probability $P(X_t)$ and the transition probability $\pi(X_t)$ is obtained, and a likelihood Z is obtained by multiplying the appearance probability $K(X_t)$ for each time window for all time windows. That is, the likelihood Z is obtained by $Z = \prod P(X_t) \cdot$ transition probability $\pi(X_t)$. Alternatively, the likelihood Z may be obtained by calculating a log of the appearance probability $K(X_t)$ calculated for each time window and adding the log for all time windows.

Incidentally, there are a plurality of paths (state transition series) through which the state of the road surface HMM transitions from the state $S_1$ to the state $S_7$ as illustrated in Fig. 11. That is, the likelihood Z is different between state transition series for each road surface HMM.

In this example, a state transition series $Z_M$ with the highest likelihood Z is obtained by applying a known Viterbi algorithm, this state transition series is set as a state transition series corresponding to the detected time series waveform of tire vibration, and the likelihood $Z_M$ is set as Z of the road surface HMM.

The likelihood $Z_M$ is obtained for each road surface HMM.

The road surface state determination means 36 compares respective likelihoods of a plurality of hidden Markov models calculated by the likelihood calculation means 35, and determines a road surface state corresponding to a hidden Markov model with the highest likelihood as the road surface state of a road surface on which the tire is traveling.

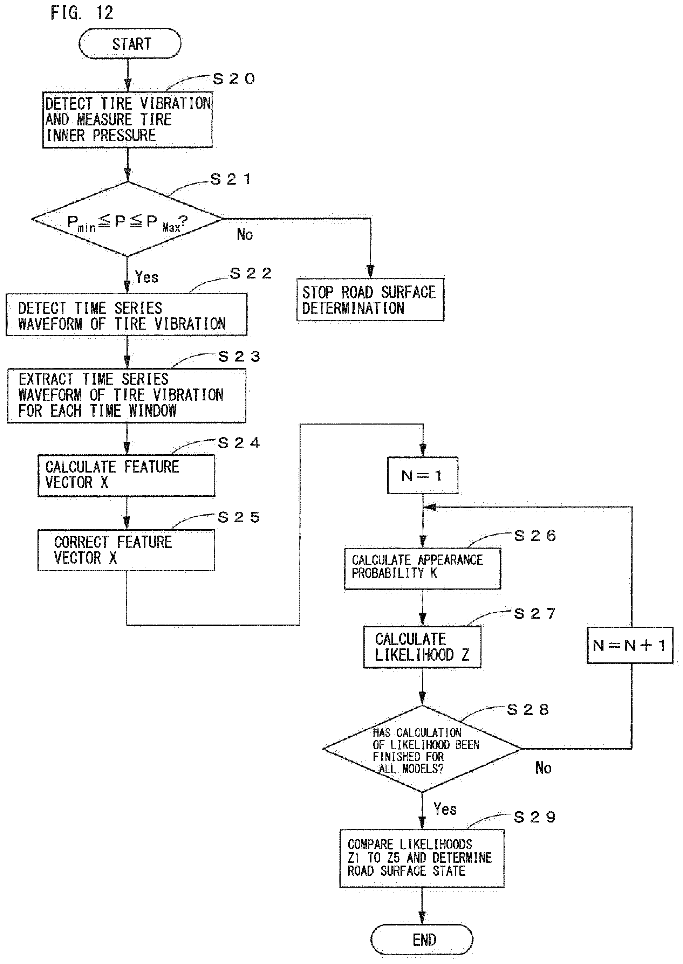

Next, a determination method of road surface state according to Embodiment 2 will be described with reference to a flowchart of Fig. 12.

First, the acceleration sensor 11 detects the vibration of the tire 1 in the tire circumferential direction during travel, and the inner pressure sensor 12 measures the tire inner pressure (step S20).

Next, whether or not the measured tire inner pressure P is within the preset determinable inner pressure range $[P_{min}, P_{Max}]$ is determined from the data of the measured tire inner pressure P (step S21).

In the case where the tire inner pressure P is within the determinable inner pressure range $[P_{min}, P_{Max}]$, the process proceeds to step S22, a time series waveform in which the vibration in the tire circumferential direction, which is the output of the acceleration sensor 11, is arranged in time series is detected, then the time series waveform that is data of tire vibration is subjected to window multiplication by a preset time window, and thus a time series waveform of tire vibration for each time window is extracted (step S23).

In this example, the time window width is set to 2 msec.

In contrast, in the case where the measured tire inner pressure P is $P < P_{min}$ or $P > P_{Max}$, the extraction of time series waveform of tire vibration is stopped. To be noted, whether the measured tire inner pressure P is within the determinable inner pressure range $[P_{min}, P_{Max}]$ may be determined again after a predetermined time has elapsed.

In step S24, the feature vector $X_t = (X_{1t}, X_{2t}, X_{3t}, X_{4t}, X_{5t}, X_{6t})$ is calculated for each time series waveform extracted for each time window.

In the present invention, the power values $X_{1t}$ to $X_{6t}$ of filtered waves of the time series waveform of tire vibration, which are components of the calculated feature vector $X_t$, are corrected by using the data of the tire inner pressure P (step S25). To be noted, this correction is performed for each power value $X_{kt}$ (k = 1 to 6).

After correcting the power values $X_{kt}$, first, the appearance probability $K(X_t)$ = emission probability $P(X_t) \times$ transition probability $\pi(X_t)$ is obtained for each time window for the DRY road surface HMM serving as the first road surface HMM (step S26), and a likelihood Z1 of the DRY road surface HMM is calculated by multiplying the appearance probability $K(X_t)$ for all time windows (step S27).

Next, whether or not the calculation of the likelihood Z has been finished for all the models is determined (step S28), and in the case where the calculation is not finished, the process returns to step S26, and a likelihood Z2 of the WET road surface HMM, which is the next model, is calculated.

In the case where the calculation of the likelihood Z for all the five models has been finished, the process proceeds to step S29, and the road surface state is determined. Specifically, likelihoods Z1 to Z5 calculated for respective road surface HMMs are compared, and a road surface state corresponding to a road surface HMM with the highest likelihood is determined as the road surface state of the road surface on which the tire is traveling.

As described above, in Embodiment 2, the vibration in the tire circumferential direction of the tire 1 during travel is detected by the acceleration sensor 11, the tire inner pressure P is measured by the inner pressure sensor 12, and in the case where the measured tire inner pressure P is within the determinable inner pressure range $[P_{min}, P_{Max}]$, the power values $X_{kt}$ of filtered waves, which are components of the feature vector $X_t$ calculated from the time series waveform of tire vibration extracted for each time window by window multiplication by the window multiplying means 31 are corrected by using the data of the tire inner pressure P, and then the road surface state is determined by using the feature vector $X_t(P)$ including the corrected power values $X_{kt}(P)$ of filtered waves as components. Therefore, the determination accuracy of the road surface state can be improved.

In addition, since the determination of the road surface state is stopped in the case where the tire inner pressure P is out of the determinable inner pressure range $[P_{min}, P_{Max}]$, erroneous determination of the road surface state can be prevented.

To be noted, although the power values $X_{kt}$ of filtered waves, which are components of the feature vector $X_t$ of the time series waveform extracted for each time window, is used as the determination parameter corrected by using the tire state in Embodiment 2 described above, the magnitude of the likelihood Z serving as a determination function may be used as the determination parameter. Alternatively, weight vectors of determination functions of the emission probability $P(X_t)$ and the transition probability $\pi(X_t)$ of the feature vector X of each road surface HMM, the number S of states, the number $M_s$ of components in mixed Gauss distribution, the mixture ratio $C_{jsm}$ of m-th mixture component, the average vector $\mu$ of Gauss distribution, variance-covariance matrix $\sigma$ of Gauss distribution, and the like, or intermediate parameters of the weight vectors may be used as the determination parameter.

The case where the magnitude of the likelihood Z is used as the determination parameter corrected by using the tire state corresponds to a first determination step of determining a road surface state from the determination parameter and the state information of the present invention.

Parameters such as the emission probability $P(X_t)$ and the transition probability $\pi(X_t)$ corrected by using the tire inner pressure P are obtained by learning of the road surface HMM.

In addition, since appropriate values of frequency regions $f_{ka}$-$f_{kb}$ of the band pass filters BP(k) when obtaining the power values $X_{kt}$ change in accordance with the tire inner pressure P, by using these values as the determination parameter changed in accordance with the tire inner pressure P, the determination accuracy of the road surface state can be improved.

In addition, the time window width may be used as the determination parameter. By changing the time width of window multiplication (time window width) of the time series waveform of the vibration in the tire circumferential direction like, for example, setting a wider time window width in the case where the tire inner pressure P is high, the determination accuracy of the road surface state can be improved.

In addition, by simultaneously correcting and changing the plurality of determination parameters, the determination accuracy of the road surface state can be further improved.

Embodiment 3

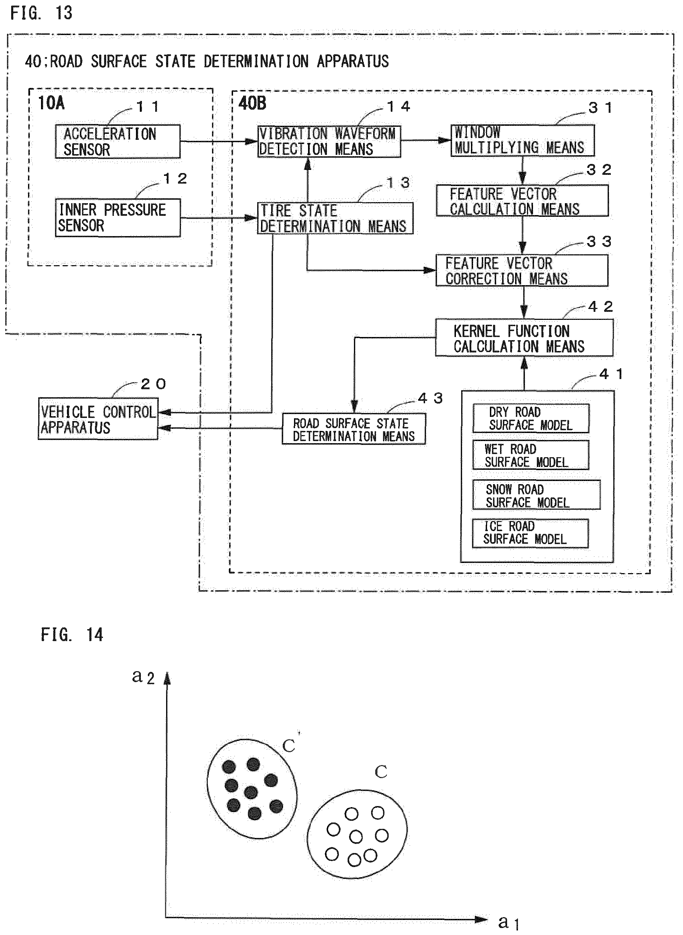

Fig. 13 is a function block diagram of a road surface state determination apparatus 40 according to Embodiment 3. In this figure, 11 represents an acceleration sensor serving as a vibration detection means, 12 represents an inner pressure sensor serving as a tire state detection means, 13 represents a tire state determination means, 14 represents a vibration waveform detection means, 31 represents a window multiplying means, 32 represents a feature vector calculation means, 33 represents a feature vector correction means, 41 represents a storage means, 42 represents a kernel function calculation means, and 43 represents a road surface state determination means.

The acceleration sensor 11 and the inner pressure sensor 12 constitute a sensor portion 10A, and the tire state determination means 13 means, the vibration waveform detection means 14, and means from the window multiplying means 31 to the road surface state determination means 43 constitute a storage/calculation portion 40B.

Each means constituting the storage/calculation portion 40B is constituted by, for example, software of a computer and a storage device such as a RAM.

To be noted, the acceleration sensor 11, the inner pressure sensor 12, the tire state determination means 13, the vibration waveform detection means 14, and means from the window multiplying means to the feature vector correction means 33 denoted by the same reference signs as in Embodiments 1 and 2 are the same as in Embodiments 1 and 2, the acceleration sensor 11 detects the vibration in the tire circumferential direction of the tire 1 during travel, and the inner pressure sensor 12 measures the tire inner pressure.

In addition, the tire state determination means 13 determines, from data of the measured tire inner pressure, whether or not the measured tire inner pressure P is within the preset determinable inner pressure range $[P_{min}, P_{Max}]$, and the vibration waveform detection means 14 detects a time series waveform in which vibration in the tire circumferential direction is arranged in time series.

The window multiplying means 31 subjects the time series waveform of the vibration in the tire circumferential direction to window multiplication with a preset time width (time window width), and thus extracts a time series waveform of tire vibration for each time window as illustrated in Fig. 8.

The feature vector calculation means 32 calculates a feature vector $X_t$ for each time series waveform extracted for each time window.

In this example, as the feature vector $X_t$, vibration levels (power values of a filtered wave) $X_{kt}$ (k =1 to 6) of specific frequency bands respectively obtained by filtering each time series waveform of tire vibration by using band pass filters of 0 to 1 kHz, 1 to 2 kHz, 2 to 3 kHz, 3 to 4 kHz, and 4 to 5 kHz are used.

Since the feature vector $X_t$ is obtained for each time window, when the total number of time windows is N, the number of feature vectors $X_t$ is also N. Hereinafter, a feature vector whose window number is i will be described as $X_i$, and power values that are components of $X_i$ will be described as $X_{ki}$.

The feature vector correction means 33 corrects, by using the data of the tire inner pressure P transmitted from the tire state determination means 13, N × k power values $X_{ki}$ calculated by the feature vector calculation means 32, and thus obtains corrected feature vectors $X_i(P)$.

The method of correction is similar to that of Embodiment 1. That is, a graph indicating a power value ratio a relationship with $K_k = X_{ki}(P)/X_{ki}(P_0)$ is prepared, and the power values $X_{ki}$ of the case where the inner pressure P are corrected.

Components $X_{ki}(P)$ of the corrected feature vectors $X_i(P)$ are $X_{ki}(P) = K_k \times X_{ki}$.

Fig. 14 is a schematic diagram illustrating an input space of the feature vector $X_i$, in which each axis represents

a vibration level $a_{ik}$ of a specific frequency band, which is a feature value, and each point represents a feature vector $X_i$. Although the actual input space is a seven-dimensional space in total with the time axis because the number of specific frequency bands is 6, this figure is illustrated in two dimensions (the horizontal axis represents $a_1$ and the vertical axis represents $a_2$).

For example, assuming that the vehicle is driving on a DRY road surface, if points composing a group C can be distinguished from a group C' composed of feature vectors $X'_i$ calculated when the vehicle is driving on a SNOW road surface, whether the vehicle is driving on a DRY road surface or on a SNOW road surface can be determined.

The storage means 41 stores four road surface models for separating a DRY road surface from the other road surfaces, a WET road surface from the other road surfaces, a SNOW road surface from the other road surfaces, and an ICE road surface from the other road surfaces by a discriminant function $f(x)$ representing a separating hyperplane.

The road surface models are obtained by learning by using, as input data, a road surface feature vector $Y_{ASV}(y_{jk})$, which is a feature vector for each time window calculated from a time series waveform of tire vibration obtained by driving a test car including a tire to which an acceleration sensor is attached on respective road surfaces of DRY, WET, SNOW, and ICE at various speeds.

To be noted, only one kind of tire size may be used for the learning, or a plurality of kinds of tire sizes may be used for the learning.

The suffix A of the road surface feature vector $Y_{ASV}(y_{jk})$ represents DRY, WET, SNOW, and ICE. The suffix j (j = 1 to M) represents the number of time series waveforms (window number) extracted by time windows, and the suffix k indicates a component of a vector. That is, $y_{jk} = (a_{j1}, a_{j2}, a_{j3}, a_{j4}, a_{j5}, a_{j6})$ holds. In addition, SV is an abbreviation of support vector, and represents data in the vicinity of a decision boundary selected by the learning.

Hereinafter, the road surface feature vector $Y_{ASV}(y_{jk})$ will be simply described as $Y_{ASV}$.

The calculation method for each road surface feature vector $Y_{ASV}$ is similar to that of the feature vector $X_j$ described above. For example, in the case of a DRY road surface feature vector $Y_{DSV}$, a time series waveform of tire vibration when driving on a DRY road surface is subjected to window multiplication with a time width T, a time series waveform of tire vibration is extracted for each time window, and a DRY road surface feature vector $Y_D$ is calculated for each time series waveform extracted for each time window. To be noted, the number of dimensions of a vector $y_i$ of the DRY road surface feature vector $Y_D$ is 6 similarly to the feature vector $X_i$. Then, by performing learning by a support vector machine (SVM) by using $Y_D$ as learning data, a support vector $Y_{DSV}$ is selected. To be noted, the storage means 41 does not have to store all $Y_D$, and only the selected $Y_{DSV}$ described above may be stored.

A WET road surface feature vector $Y_{WSV}$, a SNOW road surface feature vector $Y_{SSV}$, and an ICE road surface feature vector $Y_{ISV}$ can be obtained in a similar manner to the DRY road surface feature vector $Y_{DSV}$.

Here, it is important that the time width T is the same value as the time width T of the case of obtaining the feature vector $X_j$. In the case where the time width T is constant, the number M of time series waveforms of time windows varies depending on the kind of tire and the vehicle speed. That is, the number M of time series waveforms of time windows of the road surface feature vector YASV does not necessarily coincide with the number N of time series waveforms of time windows of the feature vector $X_j$. For example, even in the case where the kind of tire is the same, M > N holds when the vehicle speed at the time of obtaining the feature vector $X_j$ is lower than the vehicle speed at the time of obtaining the DRY road surface feature vector $Y_{DSV}$, and M < N holds when the former is higher than the latter.

The road surface model can be constructed by SVM by using respective road surface feature vectors $Y_A$ as learning data as proposed by the present applicants in Japanese Patent Application No. 2012-176779.

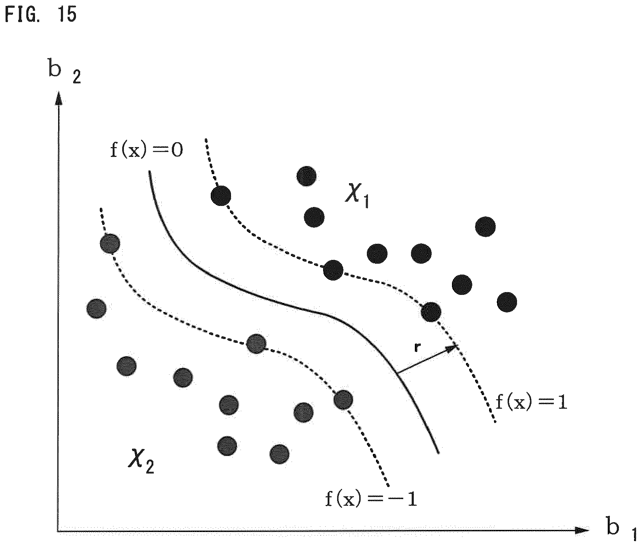

Fig. 15 is a conceptual diagram illustrating a DRY road surface feature vector $Y_{DSV}$ and a road surface feature vector $Y_{nDSV}$ not of a DRY road surface in an input space, and in this figure, black dots represent road surface feature vectors of DRY road surfaces, and dots of a lighter color represent road surface feature vectors not of a DRY surface.

To be noted, although both the DRY road surface feature vector and the road surface feature vector not of a DRY road surface are matrices, the DRY road surface feature vector and the road surface feature vector not of a DRY road surface are each represented as a two-dimensional vector in Fig. 14 for explaining how a group decision boundary is obtained.

Generally, linear separation cannot be performed at a group decision boundary. Therefore, nonlinear classification is performed on road surface feature vectors $Y_{DSV}$ and $Y_{nDSV}$ in the original input space by mapping the road surface feature vectors $Y_{DSV}$ and $Y_{nDSV}$ in a feature space of a higher dimension by nonlinear mapping $\varphi$ by using a kernel method.

Specifically, a discriminant function $f(x) = W^T\varphi(x) - b$ most suitable for identifying data is obtained by using a data set $X = (x_1, x_2, ... x_n)$ and a belonging class $z = \{1, -1\}$. Here, the data is the road surface feature vectors $Y_{Dj}$ and $Y_{nDj}$, a belonging class $z = 1$ indicates data of a DRY road surface indicated by $\chi_1$ in the figure, and $z = -1$ indicates data of a road surface different from a DRY road surface indicated by $\chi_2$. In addition, w is a weight coefficient, b is a constant, and $f(x) = 0$ corresponds to the decision boundary.

The discriminant function $f(x) = w^T\varphi(x) - b$ is optimized by using, for example, a method of Lagrange multiplier. The optimization problem can be replaced by the following formulae (3) and (4).

[Math. 2]

$$\text{maximize} \quad \sum_{\alpha} \lambda_{\alpha} - \frac{1}{2} \sum_{\alpha,\beta} \lambda_{\alpha} \lambda_{\beta} z_{\alpha} z_{\beta} \, \phi(x_{\alpha}) \phi(x_{\beta}) \quad \cdots\cdots (3)$$

$$\text{subject to} \quad \sum_{\alpha} \lambda_{\alpha} z_{\alpha} = 0 \, , \, \lambda_{\alpha} > 0 \quad \cdots\cdots (4)$$

Here, $\alpha$ and $\beta$ are indices of a plurality of pieces of learning data. In addition, $\lambda$ is a Lagrange multiplier which satisfies $\lambda > 0$.

In this case, the discriminant function $f(x) = w^T \varphi(x) - b$ can be non-linearized by replacing an inner product $\varphi(x_{\alpha}) \varphi(x_{\beta})$ by a kernel function $K(x_{\alpha}, x_{\beta})$. To be noted, $\varphi(x_{\alpha}) \varphi(x_{\beta})$ is an inner product after mapping $x_{\alpha}$ and $x_{\beta}$ in a high-dimension space by mapping $\varphi$.

The Lagrange multiplier $\lambda$ can be obtained by using an optimization algorithm such as a gradient descent method or sequential minimal optimization (SMO) on the formula (2) described above. In this case, since a kernel function is used, the high-dimension inner product does not have to be directly obtained. Therefore, the calculation time can be greatly reduced.

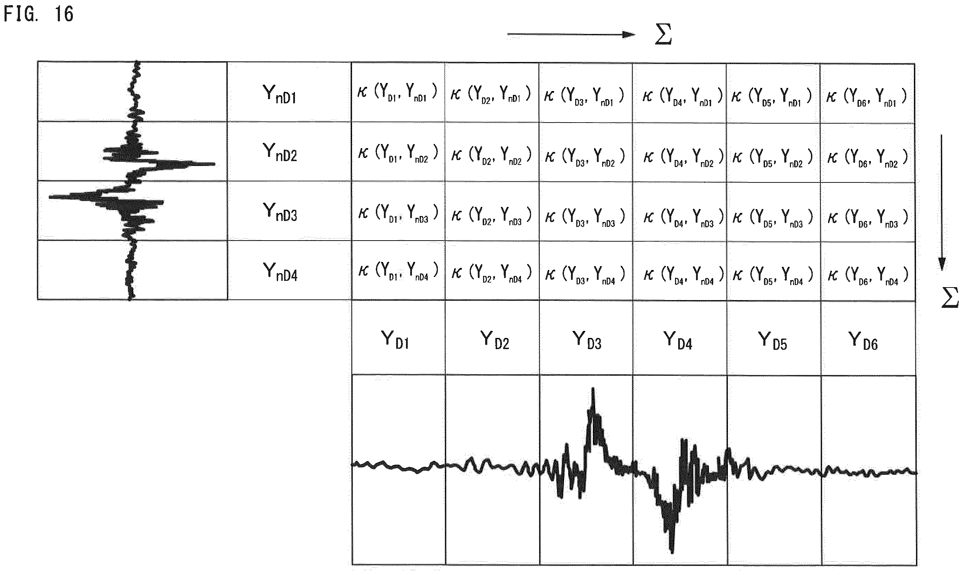

In this example, a global alignment kernel function (GA kernel) is used as the kernel function $K(x_{\alpha}, x_{\beta})$. The GA kernel $K(x_{\alpha}, x_{\beta})$ is a function constituted by the sum or the product of all local kernels $\kappa_{ij}(x_i, x_j)$ representing a degree of similarity between the DRY road surface feature vector $x_i = Y_{Di}$ and the road surface feature vector $x_j = Y_{nDj}$ not of a DRY road surface as shown in Fig. 16 and the following formulae (5) and (6), and can directly compare time series waveforms of different time lengths.

The local kernel $\kappa_{ij}(x_i, x_j)$ is obtained for each window at a time interval T.

To distinguish the DRY road surface and the road surface different from the DRY road surface, the DRY road surface and the road surface different from the DRY road surface can be distinguished from each other with a high accuracy by providing a margin to the discriminant function $f(x)$, which is a separating hyperplane that separates the DRY road surface feature vector $Y_{Dj}$ and the road surface feature vector $Y_{nDj}$ not of the DRY road surface.

The margin refers to a distance from the separating hyperplane to the closest sample (support vector), the separating hyperplane, which is the decision boundary, is $f(x) = 0$. All the DRY road surface feature vectors $Y_{Dj}$ are in a region of $f(x) \geq +1$, and the road surface feature vectors $Y_{nDj}$ not of the DRY road surface are in a region of $f(x) \leq -1$.

The DRY road surface model that distinguishes the DRY road surface from the other road surfaces is an input space including a support vector $Y_{DSV}$ in a distance of $f(x) = +1$ and a support vector $Y_{nDSV}$ in a distance of $f(x) = -1$. Generally, $Y_{DSV}$ and $Y_{nDSV}$ described above are present in plural numbers.

The same applies to a WET model that distinguishes the WET road surface from the other road surfaces, a SNOW model that distinguishes the SNOW road surface from the other road surfaces, and an ICE model that distinguishes the ICE road surface from the other road surfaces.

In this example, a global alignment kernel function (GA kernel) is used as the kernel function $K(x_{\alpha}, x_{\beta})$. The GA kernel $K(x_{\alpha}, x_{\beta})$ is a function constituted by the sum or the product of all local kernels $\kappa_{ij}(x_i, x_j)$ representing a degree of similarity between the DRY road surface feature vector $x_i = Y_{Di}$ and the road surface feature vector $x_j = Y_{nDj}$ not of a DRY road surface as shown in Fig. 7 and the following formulae (5) and (6), and can directly compare time series waveforms of different time lengths.

[Math. 3]

$$K(x_{\alpha}, x_{\beta}) = \sum_{i=1}^{m} \sum_{j=1}^{n} \kappa_{ij}(x_{\alpha i}, x_{\beta j}) \quad \cdots\cdots (5)$$

$$\kappa_{ij}(x_{\alpha i}, x_{\beta j}) = \exp\left(-\frac{\|x_{\alpha i} - x_{\beta j}\|^2}{\sigma^2}\right) \quad \cdots\cdots (6)$$

wherein $\|x_{\alpha i} - x_{\beta j}\|$ is a distance (norm) between feature vectors, and $\sigma$ is a constant.

The local kernel $\kappa_{ij}(x_i, x_j)$ is obtained for each window of a time interval T.

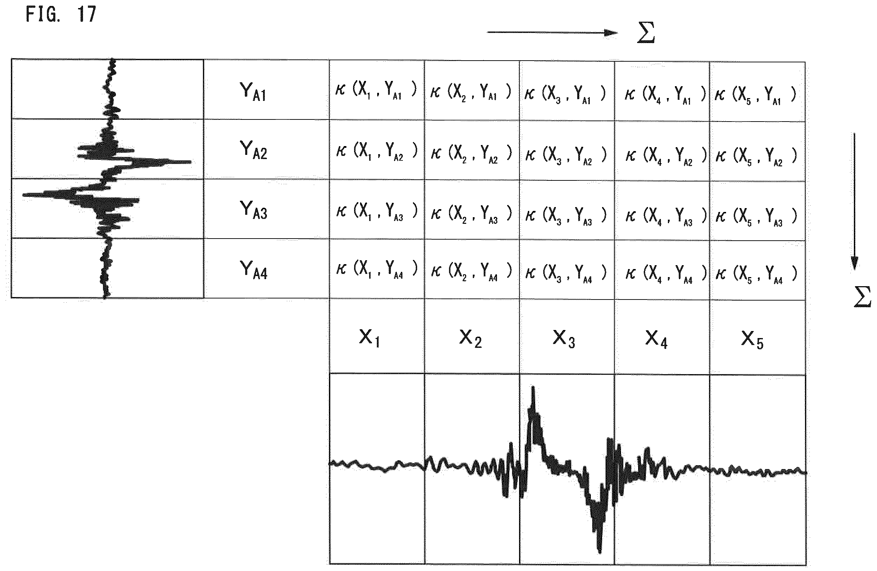

To be noted, Fig. 17 illustrates an example in which a GA kernel of the DRY road surface feature vector $Y_{Dj}$ whose number of time windows is 6 and the road surface feature vector $Y_{nDj}$ not of a DRY road surface whose number of time windows is 4 is obtained.

To distinguish the DRY road surface and the road surface different from the DRY road surface, the DRY road surface and the road surface different from the DRY road surface can be distinguished from each other with a high accuracy by providing a margin to the discriminant function f(x), which is a separating hyperplane that separates the DRY road surface feature vector $Y_{Dj}$ and the road surface feature vector $Y_{nDj}$ not of the DRY road surface.

The margin refers to a distance from the separating hyperplane to the closest sample (support vector), the separating hyperplane, which is the decision boundary, is f(x) = 0. All the DRY road surface feature vectors $Y_{Dj}$ are in a region of f(x) $\geq$ +1, and the road surface feature vectors $Y_{nDj}$ not of the DRY road surface are in a region of f(x) $\leq$ -1.

The DRY road surface model that distinguishes the DRY road surface from the other road surfaces is an input space including a support vector $Y_{DSV}$ in a distance of f(x) = +1 and a support vector $Y_{nDSV}$ in a distance of f(x) = -1. Generally, $Y_{DSV}$ and $Y_{nDSV}$ described above are present in plural numbers.

The same applies to a WET model that distinguishes the WET road surface from the other road surfaces, a SNOW model that distinguishes the SNOW road surface from the other road surfaces, and an ICE model that distinguishes the ICE road surface from the other road surfaces.

The kernel function calculation means 42 respectively calculates GA kernels $K_D(X, Y)$, $K_W(X, Y)$, $K_S(X, Y)$, and $K_I(X, Y)$ from the feature vector $X_i(P)$ calculated by the feature vector calculation means 32 and corrected by the feature vector correction means 33, and from respective support vectors $Y_{ASV}$ and $Y_{nASV}$ (A = D, W, S, and I) of the DRY model, the WET model, the SNOW model, and the ICE model stored in the storage means 41.

As illustrated in Fig. 17, the GA kernel K(X, Y) is a function constituted by the sum or the product of all local kernels $\kappa_{ij}(X_i, Y_j)$ when $x_i$ is the feature vector $X_i$ and $x_j$ is the road surface vector $Y_{Aj}$ or $Y_{nAj}$ in [Math. 3] described above, and can directly compare time series waveforms of different time lengths. To be noted, this figure illustrates an example in which $x_j$ is the road surface feature vector $Y_{Aj}$, the number of time windows of the feature vector $X_i$ is n = 5, and the number of time windows of the road surface feature vector $Y_{Aj}$ is m = 4.

As in this example, the degree of similarity between feature vectors $X_i$ and $Y_{Aj}$ (or between $X_i$ and $Y_{nAj}$) can be obtained even in the case where the number n of time series waveforms of time windows in the case of obtaining the feature vector $X_i$ and the number m of time series waveforms of time windows in the case of obtaining the road surface feature vector $Y_{Aj}$ (or $Y_{nAj}$) are different.

The road surface state determination means 43 determines the road surface state on the basis of values of four discriminant functions $f_A(x)$ (A = D, W, S, and I) using kernel functions $K_A(X, Y)$ shown in the following formulae (7) to (10).

[Math. 4]

$$f_D = \sum_{\alpha=1}^{N_{DSV}} \lambda_{D\alpha} z_{D\alpha} K_D(X, Y_\alpha) - b_D \quad \cdots\cdots (7)$$

$$f_W = \sum_{\alpha=1}^{N_{WSV}} \lambda_{W\alpha} z_{W\alpha} K_W(X, Y_\alpha) - b_W \quad \cdots\cdots (8)$$

$$f_S = \sum_{\alpha=1}^{N_{SSV}} \lambda_{S\alpha} z_{S\alpha} K_S(X, Y_\alpha) - b_S \quad \cdots\cdots (9)$$

$$f_I = \sum_{\alpha=1}^{N_{ISV}} \lambda_{I\alpha} z_{I\alpha} K_I(X, Y_\alpha) - b_I \quad \cdots\cdots (10)$$

$f_D$ is a discriminant function for distinguishing the DRY road surface from the other road surfaces, $f_W$ is a discriminant function for distinguishing the WET road surface from the other road surfaces, $f_S$ is a discriminant function for distinguishing the SNOW road surface from the other road surfaces, and $f_I$ is a discriminant function for distinguishing the ICE road surface from the other road surfaces.

In addition, $N_{DSV}$ is the number of support vectors of the DRY model, $N_{WSV}$ is the number of support vectors of the WET model, $N_{SSV}$ is the number of support vectors of the SNOW model, and $N_{ISV}$ is the number of support vectors of the ICE model.

In this example, the discriminant functions $f_D$, $f_W$, $f_S$, and $f_I$ are respectively calculated, and the road surface state is determined from the discriminant function indicating the largest value among the calculated discriminant functions $f_A$.

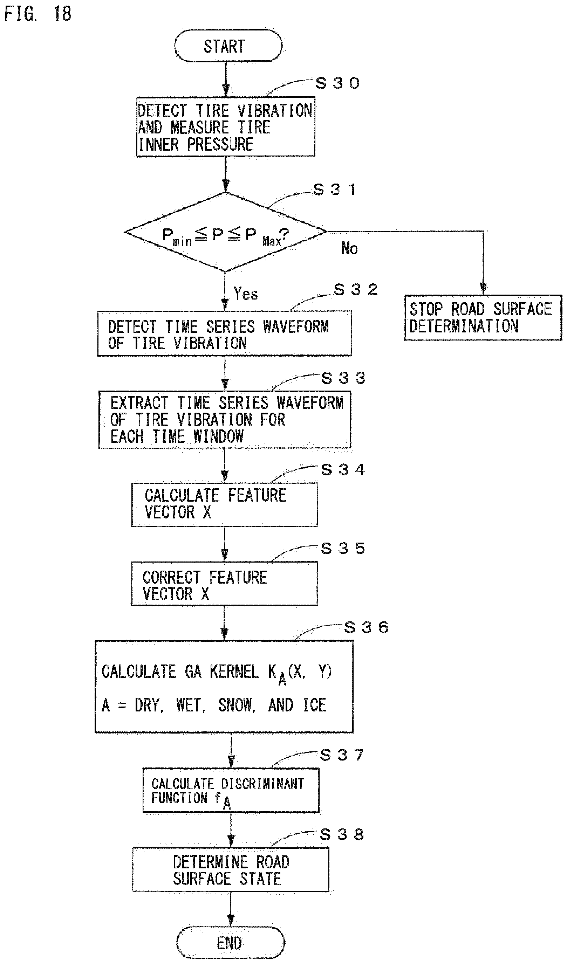

Next, a determination method of the road surface state according to Embodiment 3 will be described with reference to a flowchart of Fig. 18.

First, the acceleration sensor 11 detects the vibration of the tire 1 in the tire circumferential direction during travel, and the inner pressure sensor 12 measures the tire inner pressure (step S30).

Next, whether or not the measured tire inner pressure P is within the preset determinable inner pressure range $[P_{min}, P_{Max}]$ is determined from the data of the measured tire inner pressure (step S31).

In the case where the tire inner pressure P is within the determinable inner pressure range $[P_{min}, P_{Max}]$, the process proceeds to step S32, a time series waveform in which the vibration in the tire circumferential direction, which is the output of the acceleration sensor 11, is arranged in time series is detected, then the time series waveform that is data of tire vibration is subjected to window multiplication by a preset time window, and thus a time series waveform of tire vibration for each time window is extracted (step S33). The number of time series waveforms of tire vibration for respective time windows is m.

In contrast, in the case where the measured tire inner pressure P is $P < P_{min}$ or $P > P_{Max}$, the extraction of time series waveform of tire vibration is stopped. To be noted, whether the measured tire inner pressure P is within the determinable inner pressure range $[P_{min}, P_{Max}]$ may be determined again after a predetermined time has elapsed.

In step S34, the feature vector $X_i = (x_{i1}, x_{i2}, x_{i3}, x_{i4}, x_{i5}, x_{i6})$ is calculated for each time series waveform extracted for each time window.

In the present invention, the power values $x_{1i}$ to $x_{6i}$ of filtered waves of the time series waveform of tire vibration, which are components of the calculated feature vector $X_t$ are corrected by using the data of the tire inner pressure P (step S35). To be noted, this correction is performed for each power value $X_{ki}$ (k = 1 to 6).

Next, the local kernels $\kappa_{ij}(X_i, Y_j)$ are calculated from the corrected feature vector $X_i(P)$ and the support vector $Y_{Ak}$ of the road surface model stored in the storage means 41, then the sum of all the local kernels $\kappa_{ij}(X_i, Y_j)$ is obtained, and global alignment kernel functions $K_D(X, Y)$, $K_W(X, Y)$, $K_S(X, Y)$, and $K_I(X, Y)$ are respectively calculated (step S36).

Next, four discriminant functions $f_D(x)$, $f_W(x)$, $f_S(x)$, and $f_I(x)$ using the kernel functions $K_A(X, Y)$ are respectively calculated (step S37), then the values of the calculated discriminant functions $f_A(x)$ are compared, and the road surface state of the discriminant function indicating the largest value is determined as the road surface state of the road surface on which the tire 1 is traveling (step S38).

To be noted, although the power values $x_{kt}$ of filtered waves, which are components of the feature vector $X_t$ of the time series waveform extracted for each time window, is used as the determination parameter corrected by using the tire state in Embodiment 3 described above, output values of the discriminant functions $f_D$, $f_W$, $f_S$, and $f_I$ may be used as the determination parameter.

The case where the magnitude of the likelihood Z is used as the determination parameter corrected by using the tire state corresponds to a first determination step of determining a road surface state from the determination parameter and the state information of the present invention.

Alternatively, the belonging class z and the local kernels $\kappa_{ij}(X_i, Yj)$, which are parameters for obtaining the weight w of the discriminant function f(x), or the constant $\sigma$ for calculating the local kernels $K_{ij}(X_i, Yj)$ may be used as the determination parameter.

In addition, the kernel function o be used may be changed in accordance with the tire inner pressure P like, for example, changing the kernel function K to a dynamic time-warping kernel function (DTW kernel).

Alternatively, a parameter necessary for a learning process of a support vector machine may be used as the determination parameter.

In addition, the extraction method of the vibration information may be changed instead of changing the vibration information.

That is, also in this Embodiment 3, similarly to Embodiment 2 described above, the determination accuracy of the road surface state can be also improved by using the appropriate values of frequency regions $f_{ka}$-$f_{kb}$ of the band pass filters BP(k) when obtaining the power values $x_{kt}$ or the time width (time window width) for window multiplication of the time series waveform of the vibration in the tire circumferential direction as the determination parameter changed in accordance with the tire information.

In addition, by simultaneously correcting and changing the plurality of determination parameters, the determination accuracy of the road surface state can be further improved.

In addition, although the tire inner pressure is used as the tire state also in Embodiments 2 and 3, the tire inner temperature may be used as the tire state similarly to Embodiment 1 described above, or both of the tire inner pressure and the tire inner temperature may be used as the tire state. Alternatively, a tire outer surface temperature may be added to either one or both of the tire inner pressure and the tire inner temperature.

Embodiment 4

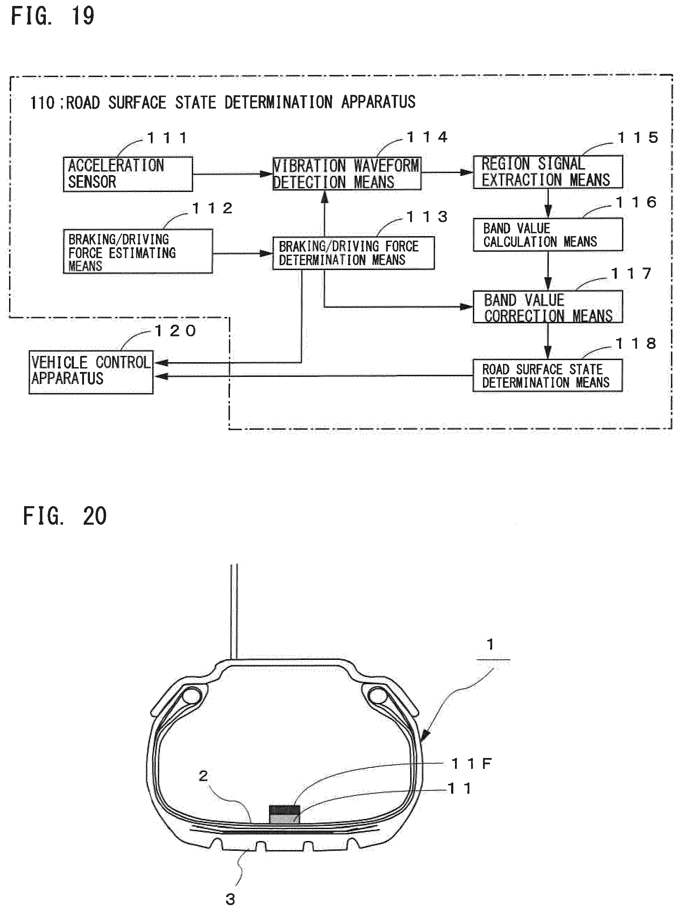

Fig. 19 is a function block diagram of a road surface state determination apparatus 110 according to the present embodiment. In this figure, 111 represents an acceleration sensor serving as a vibration detection means, 112 represents a braking/driving force estimating means that estimates a braking/driving force serving as external information input to the tire, 113 represents a braking/driving force determination means, 114 represents a vibration waveform detection means, 115 represents a region signal detection means, 116 represents a band value calculation means, 117 represents a band value correction means, and 118 represents a road surface state determination means.

Each means from the braking/driving force determination means 113 to the road surface state determination means 118 is constituted by, for example, software of a computer and a storage device such as a RAM, and is provided on the unillustrated vehicle body side.

As illustrated in Fig. 20, the acceleration sensor 111 is disposed at the center of an inner liner portion 102 of a tire 101 in a tire width direction such that the detection direction thereof is a tire circumferential direction. As a result of this, the acceleration sensor 111 detects an acceleration rate in the tire circumferential direction input applied from a road surface to a tread 103. Hereinafter, a position of the acceleration sensor 111 (strictly, a position on the surface of the tread 103 disposed on the outside of the acceleration sensor 111 in the radial direction) will be referred to as a measurement point.

Output of the acceleration sensor 111 is transmitted to, for example, the vibration waveform detection means 114 by a transmitter 111F.

The braking/driving force estimating means 112 estimates a braking/driving force J applied to the tire. Specifically, a driving force applied to the tire is estimated from an accelerator opening and a gear position, and a braking force is estimated from a brake pedal pressing force or a brake oil pressure. J > 0 corresponds to a driving force and J < 0 corresponds to a braking force.

To be noted, the braking/driving force J applied to the tire may be estimated from either or both of information of a vehicle body acceleration rate and road surface slope information, or the braking/driving force J applied to the tire may be estimated from any or a plurality of pieces of information of vehicle body speed, wheel speed, and road surface slope information.

The braking/driving force determination means 113 determines, from the estimated braking/driving force J, whether or not the state of the tire 101 is a state in which determination of the road surface state can be performed. Specifically, in the case where the magnitude $|J|$ of the estimated braking/driving force J exceeds a threshold value $J_{Max}$, it is determined that determination of the road surface state from the detected vibration waveform is difficult, and determination of the road surface state is stopped by transmitting a stopping instruction signal for stopping detection of the vibration waveform to the vibration waveform detection means 114.

In contrast, in the case where the magnitude $|J|$ of the estimated braking/driving force J does not exceed the threshold value $J_{Max}$ ($-J_{Max} \le J \le J_{Max}$), data of the braking/driving force J is output to the band value correction means 117.

To be noted, it is preferable that $J_{Max}$ is within a range of 0.2 G to 0.8 G. In this example, $J_{Max}$ is 0.4 G.

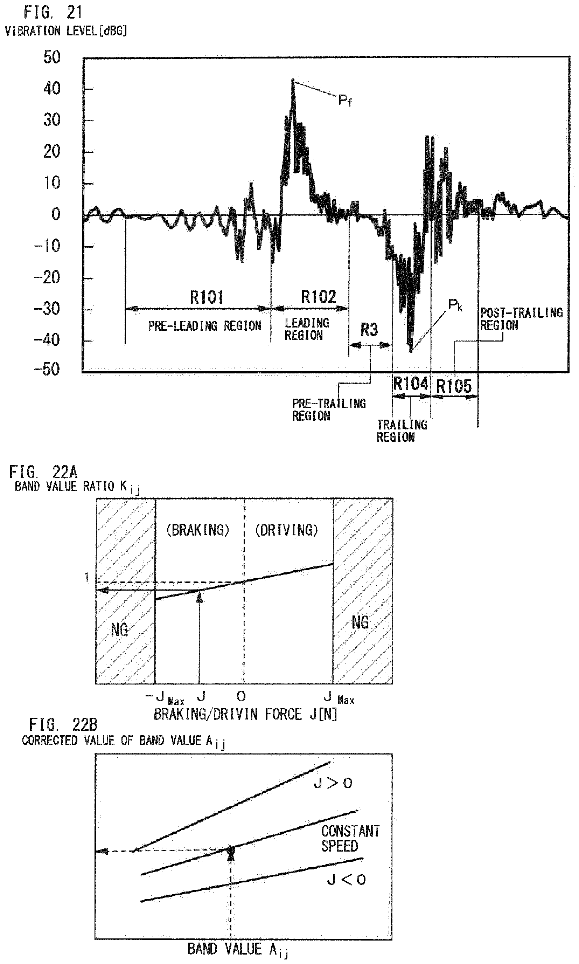

The vibration waveform detection means 114 detects a time series waveform in which vibration in the tire circumferential direction input to the tire 101 during travel, which is an output of the acceleration sensor 111, is arranged in time series. As illustrated in Fig. 21, a peak (positive peak) $P_f$ appearing first in the time series waveform of vibration is a peak generated when a measurement point collides with a road surface, and the position of this peak $P_f$ is a leading point $P_f$. A peak (negative peak) $P_k$ appearing next is a peak generated when the measurement point is separated from the road surface, and the position of this peak $P_k$ is a trailing point.

The region signal extraction means 115 divides the time series waveform detected by the vibration waveform detection means 114 into a pre-leading region R101 before the peak $P_f$ on the leading side, a leading region R102 in which the peak $P_f$ on the leading side is formed, a pre-trailing region R103 which is a region between the peak $P_f$ on the leading side and the peak $P_k$ on the trailing side, a trailing region R104 in which the peak $P_k$ on the trailing side is formed, and a post-trailing region R105 after the trailing region R104, and thus extracts a time series waveform of vibration in each of the regions R101 to R105.

To be noted, in the case where the stop instruction signal has been input from the braking/driving force determination means 113, the extraction operation of the time series waveform is stopped.

The band value calculation means 116 subjects the respective time series waveforms of the regions R101 to R105 to band-pass filters, and calculates band values $A_{ij}$, which are magnitudes of vibration components in predetermined frequency regions. To be noted, the affix i indicates the regions R101 to R105 of the time series waveform, and the affix j indicates an extracted frequency region.

For example, $A_{11}$ is a band value selected from a 2 kHz-8 kHz band of the pre-leading region R101, $A_{23}$ is a band value selected from a 4 kHz-10 kHz band of the leading region R102, and $A_{52}$ is a band value selected from a 2 kHz-4 kHz band of the post-trailing region R105.

This band value $A_{ij}$ corresponds to a determination parameter of the present invention.

The band value correction means 117 corrects the band value $A_{ij}$ calculated by the band value calculation means 116 by using data of the braking/driving force J estimated by the braking/driving force determination means 113. Specifically, a graph illustrating a relationship between the braking/driving force J and a band value ratio $K_{ij} = a_{ij}(J)/a_{ij}(0)$

as illustrated in Fig. 22 is prepared, and a band value $A_{ij}(J)$ when the braking/driving force J is corrected. To be noted, $a_{ij}(0)$ is a band value during constant-speed driving (J = 0).

When a corrected band value is expressed as $A_{ij}(J)$, $A_{ij}(J) = K_{ij} \times A_{ij}$ holds.

To be noted, not all the band values $A_{ij}$ is larger during acceleration (J > 0) and smaller during deceleration (J < 0) as illustrated in Fig. 22A. Therefore, as described above, a graph showing a relationship between the braking/driving force J and the band value ratio $K_{ij}$ needs to be prepared for each extraction region Ri and extraction frequency region jj.

To be noted, the method for correcting the band values $A_{ij}$ is not limited to the method described above, and, as illustrated in Fig. 22B, a straight line or a curved line indicating a relationship between $A_{ij}$ and $A_{ij}(J)$ may be obtained in advance for each braking/driving force J, and $A_{ij}(J)$ on the straight line or curved line corresponding to a braking/driving force J with of $A_{ij}$ may be used as a corrected value.

The road surface state determination means 118 estimates the road surface state by using a function value fk obtained by using the band value $A_{ij}(J)$ corrected by the band value correction means 117 instead of $A_{ij}$ calculated by the band value calculation means 16 in a plurality of preset discriminant functions $Fk(A_{ij})$.

In this example, as the discriminant functions Fk, a discriminant function $F1 = w_{11} \cdot A_{11} + w_{12} \cdot A_{12} - K1$ for determining whether an interposed matter such as water or snow is present on the road surface, $F2 = w_{21} \cdot A_{21} + w_{22} \cdot A_{51} - K2$ for determining whether or not the road surface is a snow-covered surface, and $F3 = w_{31} \cdot A_{52} + w_{32} \cdot A_{31} + W_{33} \cdot A_{41} + w_{34} \cdot A_{53}$ for determining which of water and snow the interposed matter on the road surface is, that is, which of a deep WET road surface and a deep sherbet-like snow road the road surface is, which the present applicant has proposed in Japanese Patent Application No. 2010-115730 (Patent Literature 1), are used, and whether or not the road surface is a "snow road" and which of a "snow-covered road" and a "shallow sherbet-like snow road" the "snow road" is are determined.

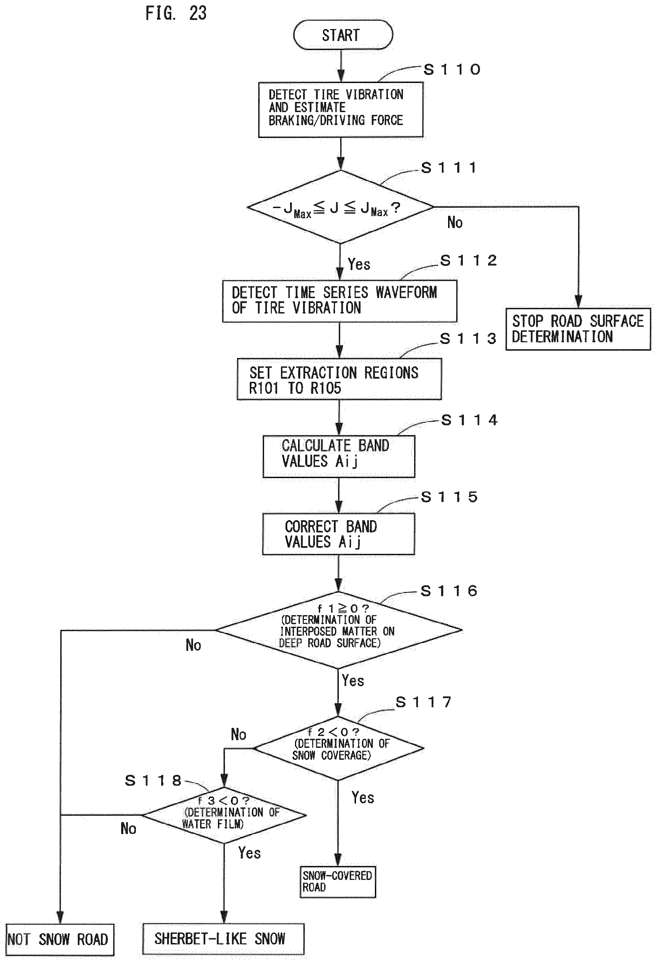

Next, a road surface state determination method according to Embodiment 4 will be described with reference to a flowchart of Fig. 23.

First, vibration in the tire circumferential direction of the tire 101 during travel is detected by the acceleration sensor 111, and the braking/driving force J applied to the tire 101 is estimated by the braking/driving force estimating means 112 (step S110).

Next, whether or not the magnitude |J| of the estimated braking/driving force J is equal to or smaller than the threshold value $J_{Max}$ ($-J_{Max} \le J \le J_{Max}$) is determined (step S111).

In the case where the magnitude |J| of the braking/driving force J is equal to or smaller than the threshold value $J_{Max}$, the process proceeds to step S112, a time series waveform in which the vibration in the tire circumferential direction, which is the output of the acceleration sensor 111, is arranged in time series is detected, then the time series waveform that is data of tire vibration is subjected to window multiplication by a preset time window, and thus a time series waveform of tire vibration for each time window is extracted (step S113).

In contrast, in the case where the estimated braking/driving force J is $J < -J_{Max}$ or $J > J_{Max}$, the extraction of time series waveform of tire vibration is stopped.

In this example, $J_{Max}$ is 0.4 G and J is 0.1 G.

Next, the detected time series waveform is divided into the pre-leading region R101, the leading region R102, the pre-trailing region R103, the trailing region R104, and the post-trailing region R105 (step S113), and then the band values $A_{ij}$ are calculated from time series waveforms of vibration in the respective regions R101 to R105 (step S114).

The band values $A_{ij}$ are band values whose extraction region of time series waveform is Ri and whose frequency region is $[f_{ja}, f_{jb}]$. For example, $A_{23}$ is a band value of the leading region R2 in a frequency region [4 kHz, 10 kHz].

In the present invention, the calculated band values $A_{ij}$ are corrected by using data of the braking/driving force J (step S115). To be noted, the correction is performed on each band value $A_{ij}$.

Next, whether or not there is an interposed matter such as water or snow on the road surface is determined (step S116).

Specifically, a discriminant function $F1 = w_{11} \cdot A_{11} + w_{12} \cdot A_{12} - K1$ is set by experimentally obtaining a relationship between a band value $A_{11}$ and a band value $A_{12}$ in various road surface states in advance, and a function value f1 is obtained by using, as a band value $A_{11}$ and a band value $A_{12}$ in this discriminant function F1, a band value $A_{11}(J)$ and a band value $A_{12}(J)$ that have been respectively corrected by using the braking/driving force J

In the case where the function value f1 satisfies $f1 \ge 0$, it is determined that an interposed matter such as water or snow is present on the road surface, therefore the process proceeds to step S117, and whether or not the interposed matter on the road surface is soft fresh snow that has piled up is determined. In contrast, in the case where f1 < 0 holds, it is determined that the road surface is "not a snow road".

In step S117, whether or not it is a snow-covered road on which fresh snow has piled up is determined.

Specifically, a discriminant function $F2 = w_{21} \cdot A_{21} + w_{22} \cdot A_{51} - K2$ is set by experimentally obtaining a relationship between a band value $A_{21}$ and a band value $A_{51}$ in various road surface states in advance, and a function value f2 is obtained by using, as a band value $A_{21}$ and a band value $A_{51}$ in this discriminant function F2, a band value $A_{21}(J)$ and a band value $A_{51}(J)$ that have been respectively corrected by using the braking/driving force J. In the case where f2 < 0 holds, it is determined that the road surface is a snow-covered road.

In contrast, in the case where the function value f2 satisfies f2 $\geq$ 0, the process proceeds to step S118, and which of water and snow the interposed matter on the road surface is, that is, which of a deep WET road surface and a deep sherbet-like snow road the road surface is is determined.

That is, in step S118, a discriminant function F3 = $w_{31} \cdot A_{52} + w_{32} \cdot A_{31} + W_{33} \cdot A_{41} + w_{34} \cdot A_{53}$ is set for band values $A_{52}$, $A_{31}$, $A_{41}$, and $A_{53}$ in various road surface states, and a function value f3 is obtained by using, as band values $A_{52}$, $A_{531}$, $A_{41}$, and $A_{53}$ in this discriminant function F3, band values $A_{52}(J)$, $A_{31}(J)$, $A_{41}(J)$, and $A_{53}(J)$ that have been respectively corrected by using the braking/driving force J. In the case where f3 $\geq$ 0 holds, determination is made as a deep WET road (not a snow road), and in the case where f3 < 0 holds, the road surface is determined as a sherbet-like snow road.

As described above, in Embodiment 4, the vibration in the tire circumferential direction of the tire 1 during travel is detected by the acceleration sensor 111, the braking/driving force J applied to the tire 1 is estimated by the braking/driving force estimating means 112, and in the case where the magnitude |J| of the estimated braking/driving force J is equal to or smaller than the threshold value $J_{Max}$ ($-J_{Max} \leq J \leq J_{Max}$), the band values $A_{ij}$ obtained from the time series waveform of the vibration in the tire circumferential direction serving as determination parameters are corrected by using the braking/driving force J, and the road surface state is determined by using the corrected band values $A_{ij}(J)$. Therefore, the determination accuracy of the road surface state can be improved.

In addition, since the determination of the road surface state is stopped in the case where the braking/driving force J is J < $-J_{Max}$ or J > $J_{Ma}$, erroneous determination of the road surface state can be prevented.

To be noted, although the braking/driving force J is used as the external information input to the tire in Embodiment 4, a lateral force applied to the tire or both of the braking/driving force J and the lateral force may be used as the external information. Alternatively, a resultant force of the braking/driving force J and the lateral force may be used as the external information.

In addition, although the band values $A_{ij}$, which are magnitudes of vibration components of predetermined frequency regions calculated from time series waveforms of the pre-leading region R101, the leading region R102, the pre-trailing region R103, the trailing region R104, and the post-trailing region R105 extracted from a time series waveform, are used as a determination parameter corrected by using the external information in Embodiment 4 described above, a function value fk of a discriminant function Fk, which is a calculated value calculated from vibration levels of a plurality of specific frequency bands, may be used as the determination parameter corrected by using the external information. Alternatively, $w_{k1}$ (weight level), which is a coefficient of the discriminant function Fk, or a constant $K_k$ may be used as the determination parameter corrected by using the external information.

The case where the function value fk of the discriminant function Fk is used as the determination parameter corrected by using the external information input to the tire corresponds to a first determination step of determining a road surface state by using a determination parameter and external information of the present invention.

In addition, a range of a specific frequency band may be used as the determination parameter.

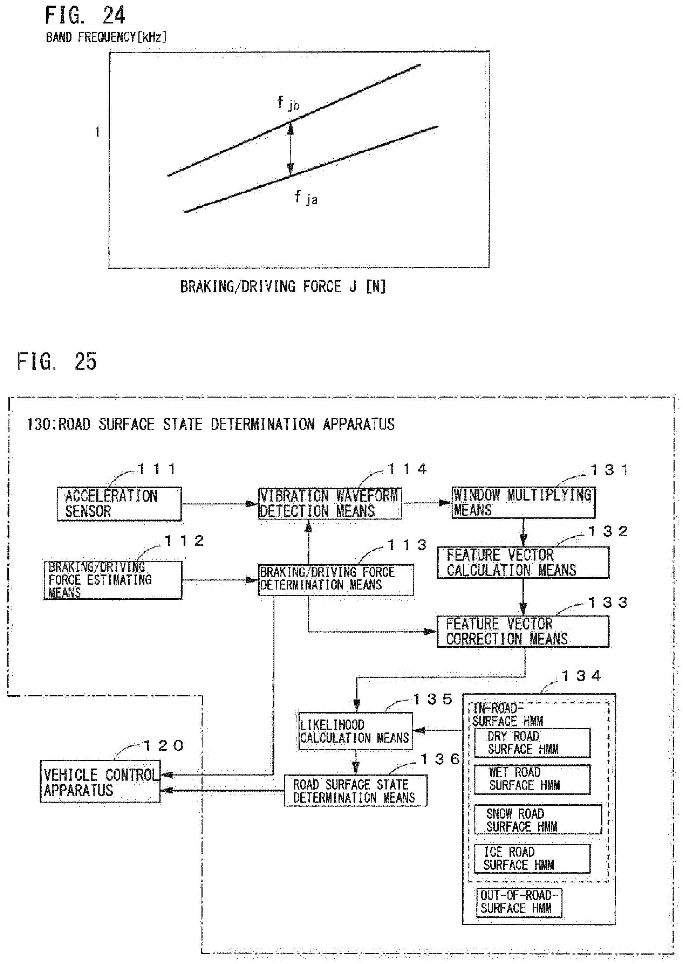

For example, as illustrated in Fig. 24, an upper limit frequency $f_{ja}$ and a lower limit frequency $f_{jb}$ of a specific frequency region, or a region width ($f_{jb}$ - $f_{ja}$) of the specific frequency region changes in accordance with the braking/driving force J. Therefore, by changing these values in accordance with the braking/driving force J, the determination accuracy of the road surface state can be improved.

In addition, a time width of a window by which the vibration waveform is to be multiplied may be used as the determination parameter. That is, the position of the peak $P_f$ on the leading side and the position of the peak $P_k$ on the trailing side of the vibration waveform or also an interval position between the peak $P_f$ on the leading side and the peak $P_k$ on the trailing side change in accordance with the braking/driving force J. Therefore, by changing the time width of a window to be multiplied by a vibration waveform, which is a region width of the extraction regions (pre-leading region R101, leading region R102, pre-trailing region R103, trailing region R104, and post-trailing region R105) of the vibration waveform, in accordance with the braking/driving force J, the determination accuracy of the road surface state can be further improved.

In addition, by simultaneously correcting and changing a plurality of determination parameters, the determination accuracy of the road surface state can be further improved.

Embodiment 5

Fig. 25 is a function block diagram of a road surface state determination apparatus 130 according to Embodiment 5. In this figure, 111 represents an acceleration sensor serving as a vibration detection means, 112 represents a braking/driving force estimating means, 113 represents a braking/driving force determination means, 114 represents a vibration waveform detection means, 131 represents a window multiplying means, 132 represents a feature vector calculation means, 133 represents a feature vector correction means, 134 represents a storage means, 135 represents a likelihood calculation means, and 136 represents a road surface state determination means.

To be noted, each means from the acceleration sensor 111 to the vibration waveform detection means 114 denoted by the same reference signs as in Embodiment 4 is the same as in Embodiment 4.

The acceleration sensor 111 detects the vibration in the tire circumferential direction of the tire 101 during travel, and the braking/driving force estimating means 112 estimates the braking/driving force J applied to the tire 101.

The braking/driving force determination means 113 determines whether the estimated braking/driving force J is within a preset determinable inner pressure range [$-J_{Max}$, $J_{Max}$], and the vibration waveform detection means 114 detects a time series waveform in which vibration in the tire circumferential direction is arranged as illustrated in Fig. 21.

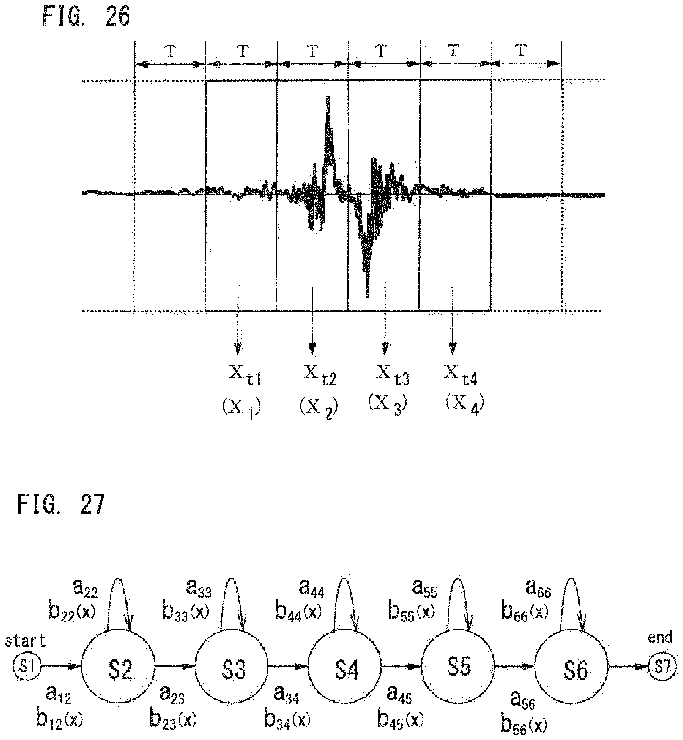

The window multiplying means 131 subjects the time series waveform of the vibration in the tire circumferential direction to window multiplication with a preset time width (time window width), and thus extracts a time series waveform of tire vibration for each time window as illustrated in Fig. 26.

The feature vector calculation means 132 calculates a feature vector $X_t$ for each time series waveform extracted for each time window. In this example, as the feature vector $X_t$, vibration levels (power values of a filtered wave) $x_{kt}$ of specific frequency bands extracted obtained by filtering each time series waveform of tire vibration by using k band pass filters BP(k) of frequency regions of $f_{ka}$ to $f_{kb}$. The number of dimensions of a feature vector X is k, and, in this example, since the specific frequency bands are set to six bands of 0 to 0.5 kHz, 0.5 to 1 kHz, 1 to 2 kHz, 2 to 3 kHz, 3 to 4 kHz, and 4 to 5 kHz, k is 6.

Since the feature vector $X_t$ is obtained for each time window, when the total number of time windows is N, the number of feature vectors $X_t$ is also N.

The feature vector correction means 133 corrects, by using the data of the braking/driving force J applied to the tire transmitted from the braking/driving force determination means 113, N $\times$ k power values $x_{kt}$ (hereinafter referred to as power values $x_{kt}$) calculated by the feature vector calculation means 132. The method of correction is similar to that of Embodiment 4. That is, a graph indicating a power value ratio a relationship with $K_k = x_{kt}(J)/x_{kt}(0)$ is prepared, power values $x_{kt}$ of the case where the braking/driving force is J are corrected, and corrected feature vectors $X_t(J)$ are obtained.

When components of the corrected feature vectors $X_t(J)$ are $x_{kt}(J)$, $x_{kt}(J) = K_k \times x_{kt}$ holds.

The storage means 134 stores a plurality of hidden Markov models (hereinafter referred to as road surface HMMs) constituted for respective road surface states. A road surface HMM is composed of an in-road-surface HMM (road) and an out-of-road-surface HMM (silent). The in-road-surface HMM (road) is constituted by a vibration waveform appearing in a road surface region in the time series waveform of tire vibration, and the out-of-road-surface HMM (silent) is constituted by a waveform in a region without information.

The road surface HMM has seven states $S_1$ to $S_7$ corresponding to the time series waveform of tire vibration as illustrated in Fig. 27, and the states $S_1$ to $S_7$ are each constituted by two kinds of parameters of emission probabilities $b_{ij}(X)$ of the feature vector $X_t$ and transition probabilities $a_{ij}(X)$ between states (i, j = 1 to 7).

In this example, learning of dividing the tire vibration into five states in five states of $S_2$ to $S_6$ excluding the start state $S_1$ and the end state $S_7$ of each road surface HMM is performed to obtain the emission probabilities $b_{ij}(X)$ and the transition states $a_{ij}(X)$ between states of the feature vector X of each road surface HMM.

An emission probability $b_{ij}(X)$ represents the probability of the feature vector X being output when the state transitions from a state $S_i$ to a state $S_j$. The emission probability $b_{ij}(X)$ is assumed to have a mixed normal distribution.

A transition probability $a_{ij}(X)$ represents the probability of the state transitioning from the state $S_i$ to the state $S_j$.

To be noted, in the case where the number of dimensions of the feature vector X is k, the emission probability $b_{ij}$ is set for each of k components $x_k$ of the feature vector X.

In this example, data of time series waveform obtained in advance by driving a vehicle including the tire 101 provided with the acceleration sensor 111 on respective road surfaces of DRY, WET, SNOW, and ICE is used as learning data, and thus five road surface HMMs composed of four in-road-surface HMMs (road) of a DRY road surface HMM, a WET road surface HMM, a SNOW road surface HMM, and an ICE road surface HMM and one out-of-road-surface HMM (silent) are constructed.

The in-road-surface HMM (road) and the out-of-road-surface HMM (silent) both are HMMs having the seven states of S1 to S7 including the start state S1 and the end state S7.

The learning of HMM is performed by a known method such as EM algorithm, Baum-Welch algorithm, and forward-backforward algorithm.

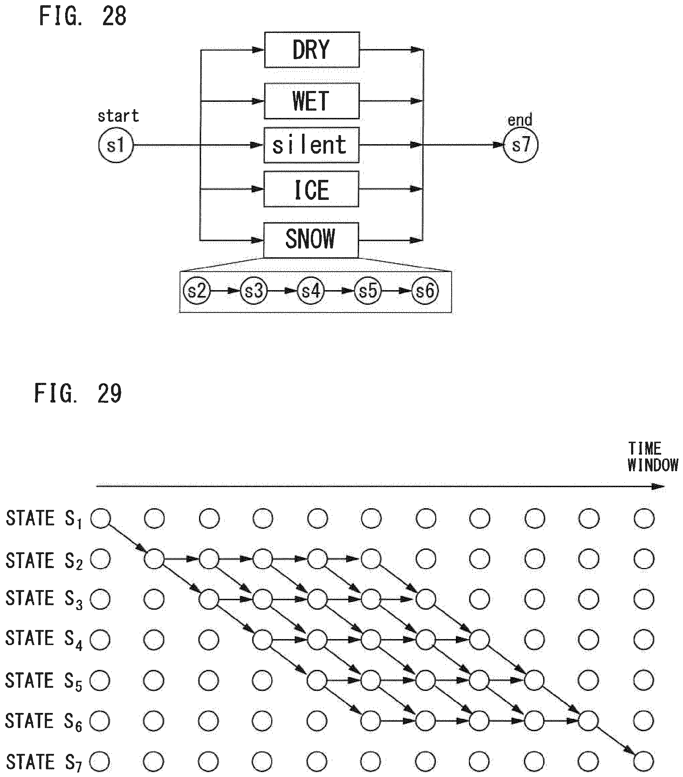

The likelihood calculation means 135 calculates likelihood of a feature vector $X_t(J)$ corrected for each of a plurality of (four herein) road surface HMMs as illustrated in Fig. 28.

Regarding the likelihood, as the present applicants have proposed in Japanese Patent Application No. 2011-140943, first, an emission probability $P(X_t(J))$ is calculated for each time window by using the following formulae (1) and (2). To be noted, $X_t$ represents a corrected feature vector $X_t(J)$ hereinbelow.

[Math. 5]

$$P(X_t) = \prod_{s=1}^{S} \left[ \sum_{m=1}^{Ms} c_{jsm} \, N(X_{st} \mid \mu_{jsm}, \sigma_{jsm}) \right] \quad \cdots\cdots (1)$$

$$N(X \mid \mu, \sigma) = \frac{1}{\sqrt{(2\pi)^n |\sigma|}} \exp\left\{ -\frac{1}{2}(x-\mu)\,\sigma^{-1}(x-\mu)^{\mathsf{T}} \right\} \quad \cdots\cdots (2)$$

X; data series
t; time
S; number of states
$M_s$; number of components in mixed Gauss distribution
$c_{jsm}$; mixture ratio of m-th mixture component
$\mu$; average vector of Gauss distribution
$\sigma$; variance-covariance matrix of Gauss distribution

Since the road surface HMM has 7 states, a transition probability $\pi(X_t)$ can be represented by a $7 \times 7$ matrix. As this transition probability $\pi(X_t)$, the transition probability $a_{ij}(X_t)$ between states of the feature vector $X_t$ obtained by learning of the road surface HMM described above can be used.

Then, an appearance probability $K(X_t)$ for each time window, which is a product of the calculated emission probability $P(X_t)$ and the transition probability $\pi(X_t)$ is obtained, and a likelihood Z is obtained by multiplying the appearance probability $K(X_t)$ for each time window for all time windows. That is, the likelihood Z is obtained by $Z = \prod P(X_t) \cdot$ transition probability $\pi(X_t)$. Alternatively, the likelihood Z may be obtained by calculating a log of the appearance probability $K(X_t)$ calculated for each time window and adding the log for all time windows.

Incidentally, there are a plurality of paths (state transition series) through which the state of the road surface HMM transitions from the state $S_1$ to the state $S_7$ as illustrated in Fig. 29. That is, the likelihood Z is different between state transition series for each road surface HMM.

In this example, a state transition series $Z_M$ with the highest likelihood Z is obtained by applying a known Viterbi algorithm, this state transition series is set as a state transition series corresponding to the detected time series waveform of tire vibration, and the likelihood $Z_M$ is set as Z of the road surface HMM.

The likelihood $Z_M$ is obtained for each road surface HMM.

The road surface state determination means 136 compares respective likelihoods of a plurality of hidden Markov models calculated by the likelihood calculation means 135, and determines a road surface state corresponding to a hidden Markov model with the highest likelihood as the road surface state of a road surface on which the tire is traveling.

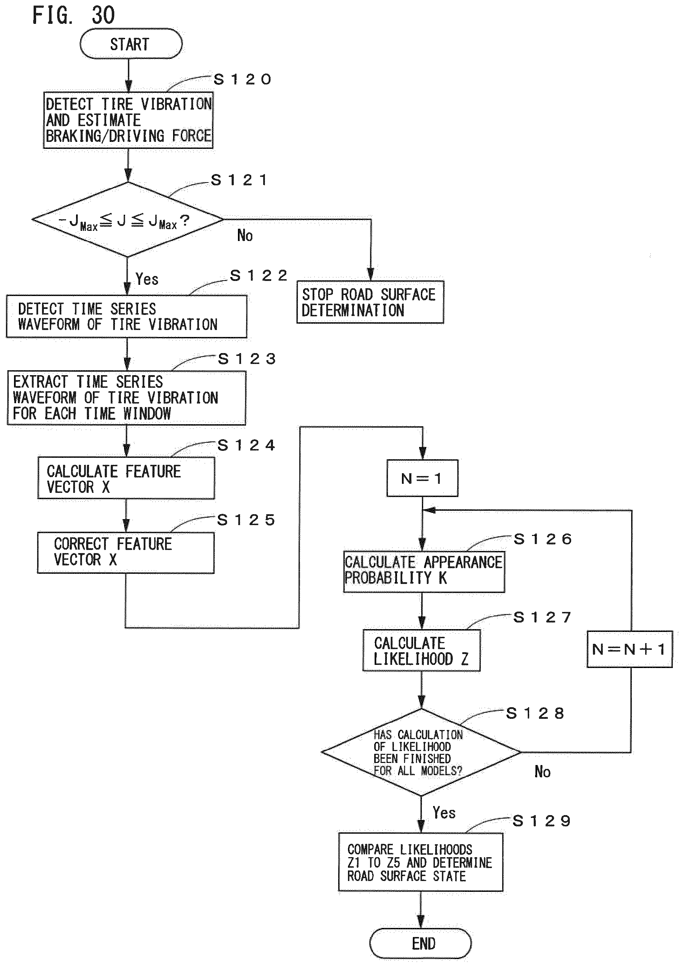

Next, a determination method of road surface state according to Embodiment 5 will be described with reference to a flowchart of Fig. 30.

First, the acceleration sensor 111 detects the vibration of the tire 101 in the tire circumferential direction during travel, and the braking/driving force estimating means 112 estimates the braking/driving force J applied to the tire 101 (step S120).

Next, whether or not the magnitude |J| of the estimated braking/driving force J is equal to or smaller than the threshold value $J_{Max}$ ($-J_{Max} \leq J \leq J_{Max}$) is determined (step S121).

In the case where the magnitude |J| of the braking/driving force J is equal to or smaller than the threshold value $J_{Max}$, the process proceeds to step S122, a time series waveform in which the vibration in the tire circumferential direction, which is the output of the acceleration sensor 111, is arranged in time series is detected, then the time series waveform that is data of tire vibration is subjected to window multiplication by a preset time window, and thus a time series waveform of tire vibration for each time window is extracted (step S123).

In contrast, in the case where the estimated braking/driving force J is $J < -J_{Max}$ or $J > J_{Max}$, the extraction of time series waveform of tire vibration is stopped.

In this example, $J_{Max}$ is 0.4 G and J is 0.1 G.

In step S124, the feature vector $X_t = (x_{1t}, x_{2t}, x_{3t}, x_{4t}, x_{5t}, x_{6t})$ is calculated for each time series waveform extracted for each time window.

In the present invention, the power values $x_{1t}$ to $x_{6t}$ of filtered waves of the time series waveform of tire vibration, which are components of the calculated feature vector $X_t$ are corrected by using the data of the estimated braking/driving force J (step S125). To be noted, this correction is performed for each power value $x_{kt}$ (k = 1 to 6).

After correcting the power values $X_{kt}$, first, the appearance probability $K(X_t)$ = emission probability $P(X_t) \times$ transition probability $\pi(X_t)$ is obtained for each time window for the DRY road surface HMM serving as the first road surface HMM (step S26), and a likelihood Z1 of the DRY road surface HMM is calculated by multiplying the appearance probability $K(X_t)$ for all time windows (step S127).

Next, whether or not the calculation of the likelihood Z has been finished for all the models is determined (step S128), and in the case where the calculation is not finished, the process returns to step S126, and a likelihood Z2 of the WET road surface HMM, which is the next model, is calculated.

In the case where the calculation of the likelihood Z for all the five models has been finished, the process proceeds to step S129, and the road surface state is determined. Specifically, likelihoods Z1 to Z5 calculated for respective road surface HMMs are compared, and a road surface state corresponding to a road surface HMM with the highest likelihood is determined as the road surface state of the road surface on which the tire is traveling.

As described above, in Embodiment 5, the vibration in the tire circumferential direction of the tire 101 during travel is detected by the acceleration sensor 111, the braking/driving force J applied to the tire 101 is estimated by the braking/driving force estimating means 112, and in the case where the estimated braking/driving force J is within the determinable inner pressure range $[-J_{Max}, J_{Max}]$, the power values $X_{kt}$ of filtered waves, which are components of the feature vector $X_t$ calculated from the time series waveform of tire vibration extracted for each time window by window multiplication by the window multiplying means 131 are corrected by using the data of the braking/driving force J, and then the road surface state is determined by using the feature vector $X_t(J)$ including the corrected power values $x_{kt}(J)$ of filtered waves as components. Therefore, the determination accuracy of the road surface state can be improved.

In addition, since the determination of the road surface state is stopped in the case where the braking/driving force J is out of the determinable inner pressure range $[-J_{Max}, J_{Max}]$, erroneous determination of the road surface state can be prevented.

To be noted, although the braking/driving force J is used as the external information input to the tire in Embodiment 5, a lateral force applied to the tire or both of the braking/driving force J and the lateral force may be used as the external information. Alternatively, a resultant force of the braking/driving force J and the lateral force may be used as the external information.

In addition, although the power values $x_{kt}$ of filtered waves of time series waveforms of tire vibration, which are components of the feature vector $X_t$ of the time series waveform extracted for each time window, is used as the determination parameter corrected by using the braking/driving force J serving as external information input to the tire in Embodiment 5 described above, the magnitude of the likelihood Z serving as a determination function may be used as the determination parameter. Alternatively, weight vectors of determination functions of the emission probability $P(X_t)$ and the transition probability $\pi(X_t)$ of the feature vector X of each road surface HMM, the number S of states, the number $M_s$ of components in mixed Gauss distribution, the mixture ratio $C_{jsm}$ of m-th mixture component, the average vector $\mu$ of Gauss distribution, variance-covariance matrix $\sigma$ of Gauss distribution, and the like, or intermediate parameters of the weight vectors may be used as the determination parameter.

The case where the magnitude of the likelihood Z is used as the determination parameter corrected by using the tire state corresponds to a first determination step of determining a road surface state from the determination parameter and the external information of the present invention.

Parameters such as the emission probability $P(X_t)$ and the transition probability $\pi(X_t)$ corrected by using the braking/driving force J are obtained by learning of the road surface HMM.

In addition, appropriate values and time window width in the case where the frequency region of the band-pass filters BP(k) for obtaining the power values $x_{kt}$ is $f_{ka}$-$f_{kb}$ may be used as the determination parameter.

In addition, by simultaneously correcting and changing a plurality of determination parameters, the determination accuracy of the road surface state can be further improved.

Embodiment 6

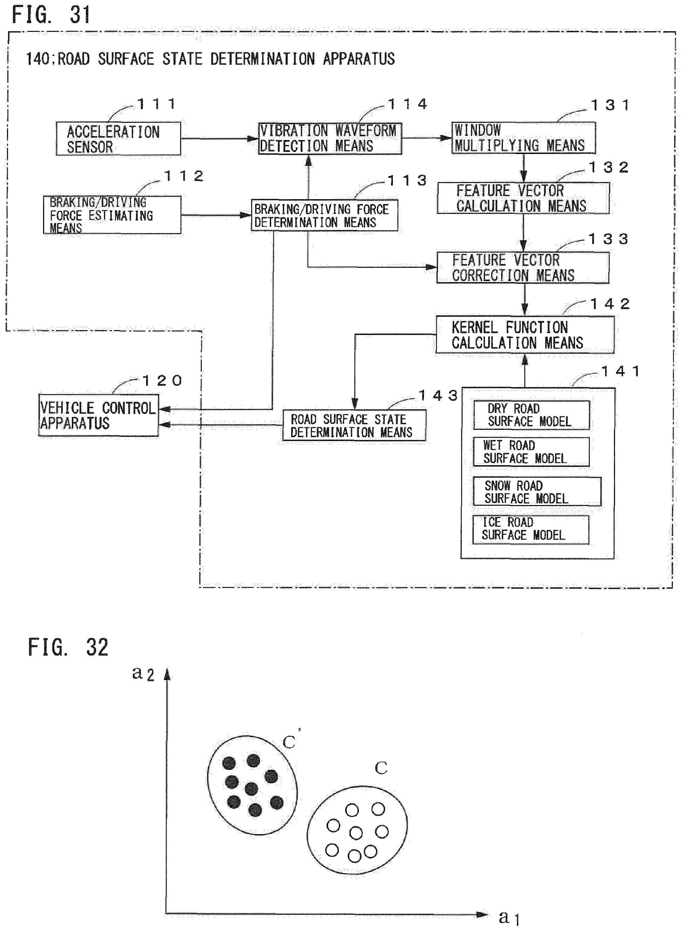

Fig. 31 is a function block diagram of a road surface state determination apparatus 140 according to Embodiment 6. In this figure, 111 represents an acceleration sensor, 112 represents a braking/driving force estimating means, 113 represents a braking/driving force determination means, 114 represents a vibration waveform detection means, 131 represents a window multiplying means, 132 represents a feature vector calculation means, 133 represents a feature vector correction means, 141 represents a storage means, 142 represents a kernel function calculation means, and 143 represents a road surface state determination means.

To be noted, each means from the acceleration sensor 111 to the vibration waveform detection means 114 denoted by the same reference signs as in Embodiment 4 and each means from the window multiplying means 131 to the feature vector correction means 133 denoted by the same reference signs as in Embodiment 5 are the same as in Embodiments 4 and 5.

The acceleration sensor 111 detects the vibration in the tire circumferential direction of the tire 101 during travel, and the braking/driving force estimating means 112 estimates the braking/driving force J applied to the tire 101.

The braking/driving force determination means 113 determines whether the estimated braking/driving force J is within a preset determinable inner pressure range $[-J_{Max}, J_{Max}]$, and the vibration waveform detection means 114 detects a time series waveform in which vibration in the tire circumferential direction is arranged as illustrated in Fig. 21.

In addition, the window multiplying means 131 subjects the time series waveform of the vibration in the tire circumferential direction to window multiplication with a preset time width (time window width), and thus extracts a time series waveform of tire vibration for each time window as illustrated in Fig. 26.

The feature vector calculation means 132 calculates a feature vector $X_t$ for each time series waveform extracted for each time window.

In this example, as the feature vector $X_t$, vibration levels (power values of a filtered wave) $X_{kt}$ (k =1 to 6) of specific frequency bands respectively obtained by filtering each time series waveform of tire vibration by using band pass filters of 0 to 1 kHz, 1 to 2 kHz, 2 to 3 kHz, 3 to 4 kHz, and 4 to 5 kHz are used.

Since the feature vector $X_t$ is obtained for each time window, when the total number of time windows is N, the number of feature vectors $X_t$ is also N. Hereinafter, a feature vector whose window number is i will be described as $X_i$, and power values that are components of $X_i$ will be described as $x_{ki}$.

The feature vector correction means 133 corrects, by using the braking/driving force J applied to the tire transmitted from the braking/driving force determination means 113, N × k power values $x_{ki}$ calculated by the feature vector calculation means 132. The method of correction is similar to that of Embodiment 1. That is, a graph indicating a relationship between a power value ratio and $K_k = x_{kt}(J)/x_{kt}(0)$ is prepared, power values $x_{kt}$ of the case where the braking/driving force is J are corrected, and corrected feature vectors $X_t(J)$ are obtained.

When components of the corrected feature vectors $X_t(J)$ are $x_{kt}(J)$, $x_{kt}(J) = K_k × x_{kt}$ holds.

Fig. 32 is a schematic diagram illustrating an input space of the feature vector $X_i$, in which each axis represents a vibration level $a_{ik}$ of a specific frequency band, which is a feature value, and each point represents a feature vector $X_i$. Although the actual input space is a seven-dimensional space in total with the time axis because the number of specific frequency bands is 6, this figure is illustrated in two dimensions (the horizontal axis represents $a_1$ and the vertical axis represents $a_2$).

For example, assuming that the vehicle is driving on a DRY road surface, if points composing a group C can be distinguished from a group C' composed of feature vectors $X'_i$ calculated when the vehicle is driving on a SNOW road surface, whether the vehicle is driving on a DRY road surface or on a SNOW road surface can be determined.

The storage means 141 stores four road surface models for separating a DRY road surface from the other road surfaces, a WET road surface from the other road surfaces, a SNOW road surface from the other road surfaces, and an ICE road surface from the other road surfaces by a discriminant function f(x) representing a separating hyperplane.

The road surface models are obtained by learning by using, as input data, a road surface feature vector $Y_{ASV}(y_{jk})$, which is a feature vector for each time window calculated from a time series waveform of tire vibration obtained by driving a test car including a tire to which an acceleration sensor is attached on respective road surfaces of DRY, WET, SNOW, and ICE at various speeds.

To be noted, only one kind of tire size may be used for the learning, or a plurality of kinds of tire sizes may be used for the learning.

The suffix A of the road surface feature vector $Y_{ASV}(y_{jk})$ represents DRY, WET, SNOW, and ICE. The suffix j (j = 1 to M) represents the number of time series waveforms (window number) extracted by time windows, and the suffix k indicates a component of a vector. That is, $y_{jk} = (a_{j1}, a_{j2}, a_{j3}, a_{j4}, a_{j5}, a_{j6})$ holds. In addition, SV is an abbreviation of support vector, and represents data in the vicinity of a decision boundary selected by the learning.

Hereinafter, the road surface feature vector $Y_{ASV}(y_{jk})$ will be simply described as $Y_{ASV}$.

The calculation method for each road surface feature vector $Y_{ASV}$ is similar to that of the feature vector $X_j$ described above. For example, in the case of a DRY road surface feature vector $Y_{DSV}$, a time series waveform of tire vibration when driving on a DRY road surface is subjected to window multiplication with a time width T, a time series waveform of tire vibration is extracted for each time window, and a DRY road surface feature vector $Y_D$ is calculated for each time series waveform extracted for each time window. To be noted, the number of dimensions of a vector $y_i$ of the DRY road surface feature vector $Y_D$ is 6 similarly to the feature vector $X_i$. Then, by performing learning by a support vector machine (SVM) by using $Y_D$ as learning data, a support vector $Y_{DSV}$ is selected. To be noted, the storage means 141 does not have to store all $Y_D$, and only the selected $Y_{DSV}$ described above may be stored.

A WET road surface feature vector $Y_{WSV}$, a SNOW road surface feature vector $Y_{SSV}$, and an ICE road surface feature vector $Y_{ISV}$ can be obtained in a similar manner to the DRY road surface feature vector $Y_{DSV}$.

Here, it is important that the time width T is the same value as the time width T of the case of obtaining the feature vector $X_j$. In the case where the time width T is constant, the number M of time series waveforms of time windows varies depending on the kind of tire and the vehicle speed. That is, the number M of time series waveforms of time windows of the road surface feature vector $Y_{ASV}$ does not necessarily coincide with the number N of time series waveforms of time windows of the feature vector $X_j$. For example, even in the case where the kind of tire is the same, M > N holds when the vehicle speed at the time of obtaining the feature vector $X_j$ is lower than the vehicle speed at the time of obtaining the DRY road surface feature vector $Y_{DSV}$, and M < N holds when the former is higher than the latter.

The road surface model can be constructed by SVM by using respective road surface feature vectors $Y_A$ as learning data as proposed by the present applicants in Japanese Patent Application No. 2012-176779.

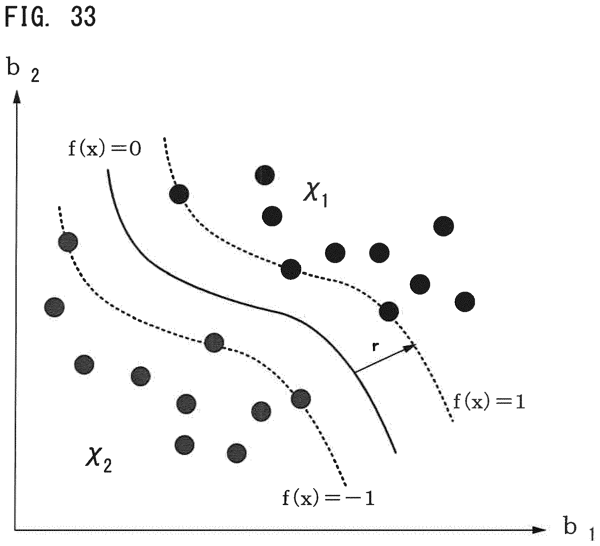

Fig. 33 is a conceptual diagram illustrating a DRY road surface feature vector $Y_{DSV}$ and a road surface feature vector $Y_{nDSV}$ not of a DRY road surface in an input space, and in this figure, black dots represent road surface feature vectors of DRY road surfaces, and dots of a lighter color represent road surface feature vectors not of a DRY surface.

To be noted, although both the DRY road surface feature vector and the road surface feature vector not of a DRY road surface are matrices, the DRY road surface feature vector and the road surface feature vector not of a DRY road surface are each represented as a two-dimensional vector in Fig. 32 for explaining how a group decision boundary is obtained.

Generally, linear separation cannot be performed at a group decision boundary. Therefore, nonlinear classification is performed on road surface feature vectors $Y_{DSV}$ and $Y_{nDSV}$ in the original input space by mapping the road surface feature vectors $Y_{DSV}$ and $Y_{nDSV}$ in a feature space of a higher dimension by nonlinear mapping $\varphi$ by using a kernel method.

Specifically, a discriminant function $f(x) = W^T\varphi(x) - b$ most suitable for identifying data is obtained by using a data set $X = (x_1, x_2, ... x_n)$ and a belonging class $z = \{1, -1\}$. Here, the data is the road surface feature vectors $Y_{Dj}$ and $Y_{nDj}$, a belonging class $z = 1$ indicates data of a DRY road surface indicated by $\chi_1$ in the figure, and $z = -1$ indicates data of a road surface different from a DRY road surface indicated by $\chi_2$. In addition, w is a weight coefficient, b is a constant, and $f(x) = 0$ corresponds to the decision boundary.

The discriminant function $f(x) = W^T\varphi(x) - b$ is optimized by using, for example, a method of Lagrange multiplier. The optimization problem can be replaced by the following formulae (3) and (4).

[Math. 6]

$$\text{maximize} \quad \sum_{\alpha} \lambda_{\alpha} - \frac{1}{2} \sum_{\alpha, \beta} \lambda_{\alpha} \lambda_{\beta} z_{\alpha} z_{\beta} \phi(x_{\alpha}) \phi(x_{\beta}) \quad \cdots\cdots (3)$$

$$\text{subject to} \quad \sum_{\alpha} \lambda_{\alpha} z_{\alpha} = 0 \ , \ \lambda_{\alpha} > 0 \quad \cdots\cdots (4)$$

Here, $\alpha$ and $\beta$ are indices of a plurality of pieces of learning data. In addition, $\lambda$ is a Lagrange multiplier which satisfies $\lambda > 0$.

In this case, the discriminant function $f(x) = w^T\varphi(x) - b$ can be non-linearized by replacing an inner product $\varphi(x_{\alpha})\varphi(x_{\beta})$ by a kernel function $K(x_{\alpha}, x_{\beta})$. To be noted, $\varphi(x_{\alpha})\varphi(x_{\beta})$ is an inner product after mapping $x_{\alpha}$ and $x_{\beta}$ in a high-dimension space by mapping $\varphi$.

The Lagrange multiplier $\lambda$ can be obtained by using an optimization algorithm such as a gradient descent method or sequential minimal optimization (SMO) on the formula (2) described above. In this case, since a kernel function is used, the high-dimension inner product does not have to be directly obtained. Therefore, the calculation time can be greatly reduced.

In this example, a global alignment kernel function (GA kernel) is used as the kernel function $K(x_{\alpha}, x_{\beta})$. The GA kernel $K(x_{\alpha}, x_{\beta})$ is a function constituted by the sum or the product of all local kernels $\kappa_{ij}(x_i, x_j)$ representing a degree of similarity between the DRY road surface feature vector $x_i = Y_{Di}$ and the road surface feature vector $x_j = Y_{nDj}$ not of a DRY road surface as shown in Fig. 16 and the following formulae (5) and (6), and can directly compare time series waveforms of different time lengths.

The local kernel $\kappa_{ij}(x_i, x_j)$ is obtained for each window at a time interval T.

To distinguish the DRY road surface and the road surface different from the DRY road surface, the DRY road surface and the road surface different from the DRY road surface can be distinguished from each other with a high accuracy by providing a margin to the discriminant function $f(x)$, which is a separating hyperplane that separates the DRY road surface feature vector $Y_{Dj}$ and the road surface feature vector $Y_{nDj}$ not of the DRY road surface.

The margin refers to a distance from the separating hyperplane to the closest sample (support vector), the separating hyperplane, which is the decision boundary, is $f(x) = 0$. All the DRY road surface feature vectors $Y_{Dj}$ are in a region of $f(x) \geq +1$, and the road surface feature vectors $Y_{nDj}$ not of the DRY road surface are in a region of $f(x) \leq -1$.

The DRY road surface model that distinguishes the DRY road surface from the other road surfaces is an input space including a support vector $Y_{DSV}$ in a distance of $f(x) = +1$ and a support vector $Y_{nDSV}$ in a distance of $f(x) = -1$. Generally, $Y_{DSV}$ and $Y_{nDSV}$ described above are present in plural numbers.

The same applies to a WET model that distinguishes the WET road surface from the other road surfaces, a SNOW model that distinguishes the SNOW road surface from the other road surfaces, and an ICE model that distinguishes the ICE road surface from the other road surfaces.

In this example, a global alignment kernel function (GA kernel) is used as the kernel function $K(x_{\alpha}, x_{\beta})$. The GA kernel $K(x_{\alpha}, x_{\beta})$ is a function constituted by the sum or the product of all local kernels $\kappa_{ij}(x_i, x_j)$ representing a degree of similarity between the DRY road surface feature vector $x_i = Y_{Di}$ and the road surface feature vector $x_j = Y_{nDj}$ not of a DRY road surface as shown in Fig. 7 and the following formulae (5) and (6), and can directly compare time series waveforms of different time lengths.

[Math. 7]

$$K(x_\alpha, x_\beta) = \sum_{i=1}^{m} \sum_{j=1}^{n} \kappa_{ij}(x_{\alpha i}, x_{\beta j}) \quad \cdots\cdots (5)$$

$$\kappa_{ij}(x_{\alpha i}, x_{\beta j}) = \exp\left(-\frac{\|x_{\alpha i} - x_{\beta j}\|^2}{\sigma^2}\right) \quad \cdots\cdots (6)$$

wherein $\|x_{\alpha i} - x_{\beta j}\|$ is a distance (norm) between feature vectors, and $\sigma$ is a constant.

The local kernel $\kappa_{ij}(x_i, x_j)$ is obtained for each window of a time interval T.

To be noted, Fig. 25 illustrates an example in which a GA kernel of the DRY road surface feature vector $Y_{Dj}$ whose number of time windows is 6 and the road surface feature vector $Y_{nDj}$ not of a DRY road surface whose number of time windows is 4 is obtained.

To distinguish the DRY road surface and the road surface different from the DRY road surface, the DRY road surface and the road surface different from the DRY road surface can be distinguished from each other with a high accuracy by providing a margin to the discriminant function f(x), which is a separating hyperplane that separates the DRY road surface feature vector $Y_{Dj}$ and the road surface feature vector $Y_{nDj}$ not of the DRY road surface.

The margin refers to a distance from the separating hyperplane to the closest sample (support vector), the separating hyperplane, which is the decision boundary, is f(x) = 0. All the DRY road surface feature vectors $Y_{Dj}$ are in a region of f(x) ≥ +1, and the road surface feature vectors $Y_{nDj}$ not of the DRY road surface are in a region of f(x) ≤ -1.

The DRY road surface model that distinguishes the DRY road surface from the other road surfaces is an input space including a support vector $Y_{DSV}$ in a distance of f(x) = +1 and a support vector $Y_{nDSV}$ in a distance of f(x) = -1. Generally, $Y_{DSV}$ and $Y_{nDSV}$ described above are present in plural numbers.

The same applies to a WET model that distinguishes the WET road surface from the other road surfaces, a SNOW model that distinguishes the SNOW road surface from the other road surfaces, and an ICE model that distinguishes the ICE road surface from the other road surfaces.

The kernel function calculation means 142 respectively calculates GA kernels $K_D(X, Y)$, $K_W(X, Y)$, $K_S(X, Y)$, and $K_I(X, Y)$ from the feature vector $X_i(J)$ calculated by the feature vector calculation means 132 and corrected by the feature vector correction means 133, and from respective support vectors $Y_{ASV}$ and $Y_{nASV}$ (A = D, W, S, and I) of the DRY model, the WET model, the SNOW model, and the ICE model stored in the storage means 141.

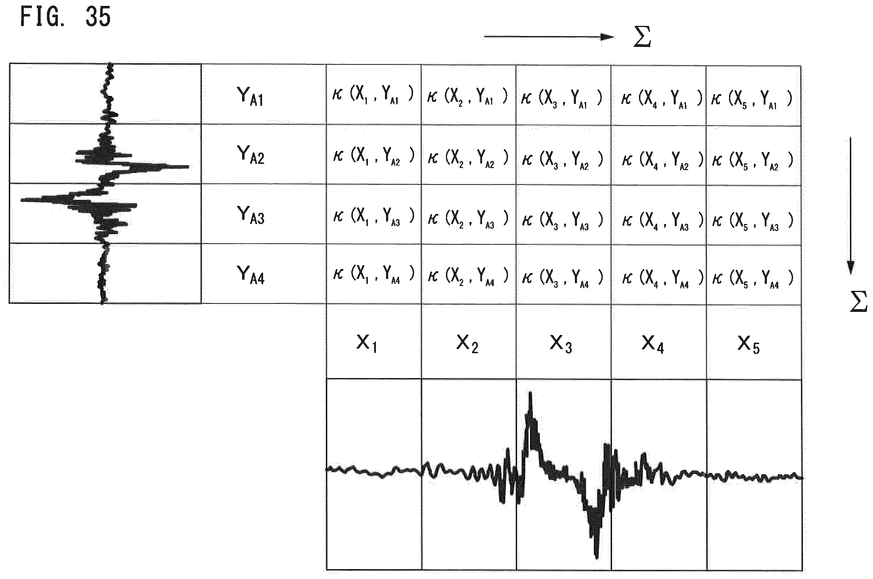

As illustrated in Fig. 35, the GA kernel K(X, Y) is a function constituted by the sum or the product of all local kernels $\kappa_{ij}(X_i, Y_j)$ when $x_i$ is the feature vector $X_i$ and $x_j$ is the road surface vector $Y_{Aj}$ or $Y_{nAj}$ in [Math. 3] described above, and can directly compare time series waveforms of different time lengths. To be noted, this figure illustrates an example in which $x_j$ is the road surface feature vector $Y_{Aj}$, the number of time windows of the feature vector $X_i$ is n = 5, and the number of time windows of the road surface feature vector $Y_{Aj}$ is m = 4.

As in this example, the degree of similarity between feature vectors $X_i$ and $Y_{Aj}$ (or between $X_i$ and $Y_{nAj}$) can be obtained even in the case where the number n of time series waveforms of time windows in the case of obtaining the feature vector $X_i$ and the number m of time series waveforms of time windows in the case of obtaining the road surface feature vector $Y_{Aj}$ (or $Y_{nAj}$) are different.

The road surface state determination means 143 determines the road surface state on the basis of values of four discriminant functions $f_A(x)$ (A = D, W, S, and I) using kernel functions $K_A(X, Y)$ shown in the following formulae (7) to (10).

[Math. 8]

$$f_D = \sum_{\alpha=1}^{N_{DSV}} \lambda_{D\alpha} z_{D\alpha} K_D(X, Y_\alpha) - b_D \quad \cdots\cdots (7)$$

$$f_W = \sum_{\alpha=1}^{N_{WSV}} \lambda_{W\alpha} z_{W\alpha} K_W(X, Y_\alpha) - b_W \quad \cdots\cdots (8)$$

$$f_S = \sum_{\alpha=1}^{N_{SSV}} \lambda_{S_\alpha} z_{S_\alpha} K_S\left(X, Y_\alpha\right) - b_S \quad \cdots\cdots (9)$$

$$f_I = \sum_{\alpha=1}^{N_{ISV}} \lambda_{I_\alpha} z_{I_\alpha} K_I\left(X, Y_\alpha\right) - b_I \quad \cdots\cdots (10)$$

$f_D$ is a discriminant function for distinguishing the DRY road surface from the other road surfaces, $f_W$ is a discriminant function for distinguishing the WET road surface from the other road surfaces, $f_S$ is a discriminant function for distinguishing the SNOW road surface from the other road surfaces, and $f_I$ is a discriminant function for distinguishing the ICE road surface from the other road surfaces.

In addition, $N_{DSV}$ is the number of support vectors of the DRY model, $N_{WSV}$ is the number of support vectors of the WET model, $N_{SSV}$ is the number of support vectors of the SNOW model, and $N_{ISV}$ is the number of support vectors of the ICE model.

In this example, the discriminant functions $f_D$, $f_W$, $f_S$, and $f_I$ are respectively calculated, and the road surface state is determined from the discriminant function indicating the largest value among the calculated discriminant functions $f_A$.

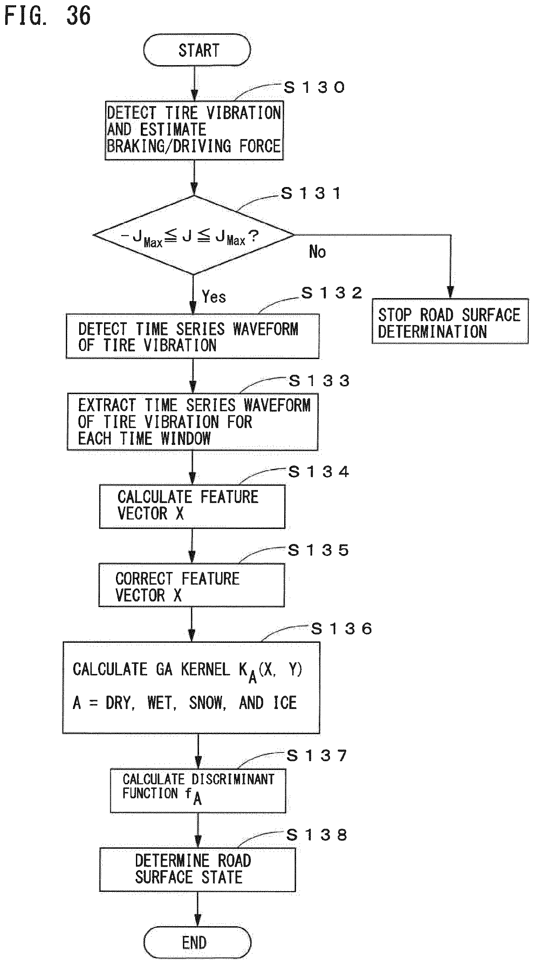

Next, a determination method of the road surface state according to Embodiment 6 will be described with reference to a flowchart of Fig. 36.

First, the acceleration sensor 111 detects the vibration of the tire 101 in the tire circumferential direction during travel, and the braking/driving force estimating means 112 measures the braking/driving force J applied to the tire 101 (step S130).

Next, whether or not the magnitude |J| of the estimated braking/driving force J is equal to or smaller than the threshold value $J_{Max}$ ($-J_{Max} \le J \le J_{Max}$) is determined (step S131).

In the case where the magnitude |J| of the braking/driving force J is equal to or smaller than the threshold value $J_{Max}$, the process proceeds to step S132, a time series waveform in which the vibration in the tire circumferential direction, which is the output of the acceleration sensor 111, is arranged in time series is detected, then the time series waveform that is data of tire vibration is subjected to window multiplication by a preset time window, and thus a time series waveform of tire vibration for each time window is extracted (step S133).

In contrast, in the case where the estimated braking/driving force J is J < $-J_{Max}$ or J > $J_{Max}$, the extraction of time series waveform of tire vibration is stopped.

In this example, $J_{Max}$ is 0.4 G and J is 0.1 G.

In step S134, the feature vector $X_t = (x_{1t}, x_{2t}, x_{3t}, x_{4t}, x_{5t}, x_{6t})$ is calculated for each time series waveform extracted for each time window.

In the present invention, the power values $x_{1t}$ to $x_{6t}$ of filtered waves of the time series waveform of tire vibration, which are components of the calculated feature vector $X_t$ are corrected by using the data of the estimated braking/driving force J (step S135). To be noted, this correction is performed for each power value $x_{kt}$ (k = 1 to 6).

Next, the local kernels $\kappa_{ij}(X_i, Y_j)$ are calculated from the corrected feature vector $X_i(J)$ and the support vector $Y_{Ak}$ of the road surface model stored in the storage means 141, then the sum of all the local kernels $\kappa_{ij}(X_i, Y_j)$ is obtained, and global alignment kernel functions $K_D(X, Y)$, $K_W(X, Y)$, $K_S(X, Y)$, and $K_I(X, Y)$ are respectively calculated (step S136).

Next, four discriminant functions $f_D(x)$, $f_W(x)$, $f_S(x)$, and $f_I(x)$ using the kernel functions $K_A(X, Y)$ are respectively calculated (step S137), then the values of the calculated discriminant functions $f_A(x)$ are compared, and the road surface state of the discriminant function indicating the largest value is determined as the road surface state of the road surface on which the tire 101 is traveling (step S138).

To be noted, although the braking/driving force J is used as the external information input to the tire in Embodiment 5, a lateral force applied to the tire or both of the braking/driving force J and the lateral force may be used as the external information. Alternatively, a resultant force of the braking/driving force J and the lateral force may be used as the external information.

To be noted, although the power values $x_{kt}$ of filtered waves, which are components of the feature vector $X_t$ of the time series waveform extracted for each time window, is used as the determination parameter corrected by using the tire state in Embodiment 6 described above, output values of the discriminant functions $f_D$, $f_W$, $f_S$, and $f_I$ may be used as the determination parameter.

The case where an output value of the discriminant functions $f_D$, $f_W$, $f_S$, or $f_I$ is used as the determination parameter corrected by using the braking/driving force J serving as external information input to the tire corresponds to a first determination step of determining a road surface state from the determination parameter and the state information of the present invention.

Alternatively, the belonging class z and the local kernels $\kappa_{ij}(X_i, Yj)$, which are parameters for obtaining the weight w of the discriminant function f(x), or the constant $\sigma$ for calculating the local kernels $\kappa_{ij}(X_i, Yj)$ may be used as the determination parameter.

In addition, the kernel function to be used may be changed in accordance with the external information like, for example, changing the kernel function K to a dynamic time-warping kernel function (DTW kernel).

Alternatively, a parameter necessary for a learning process of a support vector machine may be used as the determination parameter.

In addition, similarly to Embodiment 2 described above, the determination accuracy of the road surface state can be also improved by using the appropriate values of frequency regions fka-fkb of the band pass filters BP(k) when obtaining the power values $x_{kt}$ or the time width (time window width) for window multiplication of the time series waveform of the vibration in the tire circumferential direction as the determination parameter changed in accordance with the tire information.

In addition, by simultaneously correcting and changing the plurality of determination parameters, the determination accuracy of the road surface state can be further improved.

REFERENCE SIGNS LIST

1: tire, 2: inner liner portion, 3: tread, 4: wheel rim, 5: tire air chamber, 10: road surface state determination apparatus, 11: acceleration sensor, 12: inner pressure sensor, 13: tire state determination means, 14: vibration waveform detection means, 15: region signal extraction means, 16: band value calculation means, 17: band value correction means, 18: road surface state determination means, 101: tire, 102: inner liner portion, 103: tread, 110: road surface state determination apparatus, 111: acceleration sensor, 112: braking/driving force estimating means, 113: braking/driving force determination means, 114: vibration waveform detection means, 115: region signal extraction means, 116: band value calculation means, 117: band value correction means, 118: road surface state determination means

**Claims**

1. A road surface state determination method for determining a state of a road surface from a time-varying waveform of vibration of a tire during travel detected by a vibration detection means, the road surface state determination method comprising:

   a step of obtaining a vibration waveform of the tire;
   a step of obtaining state information of the tire; and
   either one determination step of a first determination step of determining a road surface state from a determination parameter that is obtained from the vibration waveform and is for determining the road surface state, and from the state information, and a second determination step of determining the road surface state, after correcting or changing the determination parameter by using the state information, from the corrected determination parameter.

2. The road surface state determination method according to claim 1, wherein the state information is either one or both of inner pressure of the tire and tire inner temperature.

3. The road surface state determination method according to claim 2, wherein determination of the road surface state is not performed in a case where the state information has exceeded a preset range.

4. The road surface state determination method according to any one of claims 1 to 3, wherein the determination parameter is a vibration level of a specific frequency band extracted from the vibration waveform or a calculated value calculated from vibration levels of a plurality of specific frequency bands.

5. The road surface state determination method according to any one of claims 1 to 3, wherein the determination parameter is a range of a specific frequency band.

6. The road surface state determination method according to any one of claims 1 to 3, wherein the determination parameter is a time width of a window by which the vibration waveform is multiplied.

7. The road surface state determination method according to any one of claims 1 to 3, wherein the determination parameter is a weight vector of a determination function using vibration levels of a plurality of specific frequency bands used for road surface determination, or an intermediate parameter of the weight vector.

8. The road surface state determination method according to any one of claims 1 to 3, wherein the determination parameter is an output value of a determination function using vibration levels of a plurality of specific frequency bands used for road surface determination.

9. A road surface state determination apparatus comprising:

a vibration detection means that detects vibration of a tire during travel;
a vibration waveform detection means that detects a time-varying waveform of the vibration of the tire; and
a road surface state determination means that determines a state of a road surface from the time-varying waveform,
wherein a tire state detection means that obtains state information of the tire is provided, and
wherein the road surface state determination means determines a road surface state from a determination parameter that is obtained from the vibration waveform and is for determining the road surface state, and from the state information.

10. A road surface state determination apparatus comprising:

a vibration detection means that detects vibration of a tire during travel;
a vibration waveform detection means that detects a time-varying waveform of the vibration of the tire; and
a road surface state determination means that determines a state of a road surface from the time-varying waveform,
wherein a tire state detection means that obtains state information of the tire and a parameter correction means that corrects, by using the state information, a determination parameter that is obtained from the vibration waveform and is for determining a road surface state are provided, and
wherein the road surface state determination means determines the road surface state from the determination parameter corrected by using the state information.

11. A road surface state determination method for determining a state of a road surface from a time-varying waveform of vibration of a tire during travel detected by a vibration detection means, the road surface state determination method comprising:

a step of obtaining a vibration waveform of the tire;
a step of obtaining external information input to the tire; and
either one determination step of a first determination step of determining a road surface state from a determination parameter that is obtained from the vibration waveform and is for determining the road surface state, and from the external information, and a second determination step of determining the road surface state, after correcting or changing the determination parameter by using the external information, from the corrected determination parameter.

12. The road surface state determination method according to claim 11, wherein the external information is braking/driving force applied to the tire.

13. The road surface state determination method according to claim 12, wherein determination of a road surface state is not performed in a case where the external information has exceeded a preset range.

14. The road surface state determination method according to any one of claims 11 to 13, wherein the determination parameter is a vibration level of a specific frequency band extracted from the vibration waveform or a calculated value calculated from vibration levels of a plurality of specific frequency bands.

15. The road surface state determination method according to any one of claims 11 to 13, wherein the determination parameter is a range of a specific frequency band.

16. The road surface state determination method according to any one of claims 11 to 13, wherein the determination parameter is a time width of a window by which the vibration waveform is multiplied.

17. The road surface state determination method according to any one of claims 11 to 13, wherein the determination parameter is a weight vector of a determination function using vibration levels of a plurality of specific frequency bands used for road surface determination, or an intermediate parameter of the weight vector.

**18.** The road surface state determination method according to any one of claims 11 to 13, wherein the determination parameter is an output value of a determination function using vibration levels of a plurality of specific frequency bands used for road surface determination.

FIG. 1

10 ROAD SURFACE STATE DETERMINATION APPARATUS

**10A**

11 ACCELERATION SENSOR

12 INNER PRESSURE SENSOR

**10B**

14 VIBRATION WAVEFORM DETECTION MEANS

15 REGION SIGNAL EXTRACTION MEANS

16 BAND VALUE CALCULATION MEANS

13 TIRE STATE DETERMINATION MEANS

17 BAND VALUE CORRECTION MEANS

18 ROAD SURFACE STATE DETERMINATION MEANS

20 VEHICLE CONTROL APPARATUS

FIG. 2

FIG. 3

VIBRATION LEVEL[dBG]

R1 PRE-LEADING REGION

R2 LEADING REGION

R3

$P_f$

$P_k$

PRE-TRAILING REGION

TRAILING REGION

R4

R5

POST-TRAILING REGION

FIG. 4A

BAND VALUE RATIO $K_{ij}$

NG

NG

1

$P_{min}$   P   $P_0$   $P_{Max}$

TIRE INNER PRESSURE P[MPa]

FIG. 4B

CORRECTED VALUE OF BAND VALUE $A_{ij}$

$P_3$

$P_2$

$P_1$

BAND VALUE $A_{ij}$

FIG. 5

START

↓

S 1 0

DETECT TIRE VIBRATION
AND MEASURE TIRE
INNER PRESSURE

↓

S 1 1

$P_{min} \leqq P \leqq P_{Max}$?

No →

STOP ROAD SURFACE
DETERMINATION

Yes ↓

S 1 2

DETECT TIME SERIES WAVEFORM
OF TIRE VIBRATION

↓

S 1 3

SET EXTRACTION REGIONS
R1 TO R5

↓

S 1 4

CALCULATE BAND
VALUES Aij

↓

S 1 5

CORRECT BAND VALUES Aij

↓

S 1 6

f 1 ≧ 0 ?
(DETERMINATION OF
INTERPOSED MATTER ON
DEEP ROAD SURFACE)

No ←

Yes ↓

S 1 7

f 2 < 0 ?
(DETERMINATION
OF SNOW COVERAGE)

No ←

Yes ↓

SNOW-COVERED
ROAD

S 1 8

f 3 < 0 ?
(DETERMINATION
OF WATER FILM)

No ←

Yes ↓

NOT SNOW ROAD

SHERBET-LIKE SNOW

FIG. 6

BAND FREQUENCY[kHz]

$f_{jb}$

$f_{ja}$

1

TIRE INNER PRESSURE P[MPa]

FIG. 7

30;ROAD SURFACE STATE DETERMINATION APPARATUS

10A

11 ACCELERATION SENSOR

12 INNER PRESSURE SENSOR

30B

14 VIBRATION WAVEFORM DETECTION MEANS

13 TIRE STATE DETERMINATION MEANS

31 WINDOW MULTIPLYING MEANS

32 FEATURE VECTOR CALCULATION MEANS

33 FEATURE VECTOR CORRECTION MEANS

34 IN-ROAD-SURFACE HMM
- DRY ROAD SURFACE HMM
- WET ROAD SURFACE HMM
- SNOW ROAD SURFACE HMM
- ICE ROAD SURFACE HMM

OUT-OF-ROAD-SURFACE HMM

35 LIKELIHOOD CALCULATION MEANS

36 ROAD SURFACE STATE DETERMINATION MEANS

20 VEHICLE CONTROL APPARATUS

FIG. 8

$$X_{t1} \quad X_{t2} \quad X_{t3} \quad X_{t4}$$
$$(X_1) \quad (X_2) \quad (X_3) \quad (X_4)$$

FIG. 9

FIG. 10

FIG. 11

FIG. 12

START

S 2 0

DETECT TIRE VIBRATION
AND MEASURE TIRE
INNER PRESSURE

S 2 1

$P_{min} \leqq P \leqq P_{Max}$?

No → STOP ROAD SURFACE
DETERMINATION

Yes

S 2 2

DETECT TIME SERIES
WAVEFORM OF TIRE VIBRATION

S 2 3

EXTRACT TIME SERIES
WAVEFORM OF TIRE VIBRATION
FOR EACH TIME WINDOW

S 2 4

CALCULATE FEATURE
VECTOR X

S 2 5

CORRECT FEATURE
VECTOR X

$N = 1$

S 2 6

CALCULATE APPEARANCE
PROBABILITY K

S 2 7

CALCULATE
LIKELIHOOD Z

$N = N + 1$

S 2 8

HAS CALCULATION
OF LIKELIHOOD BEEN
FINISHED FOR
ALL MODELS?

No

Yes

S 2 9

COMPARE LIKELIHOODS
Z1 TO Z5 AND DETERMINE
ROAD SURFACE STATE

END

34

FIG. 13

40;ROAD SURFACE STATE DETERMINATION APPARATUS

**10A**

ACCELERATION SENSOR — 1 1

INNER PRESSURE SENSOR — 1 2

**40B**

VIBRATION WAVEFORM DETECTION MEANS — 1 4

TIRE STATE DETERMINATION MEANS — 1 3

WINDOW MULTIPLYING MEANS — 3 1

FEATURE VECTOR CALCULATION MEANS — 3 2

FEATURE VECTOR CORRECTION MEANS — 3 3

KERNEL FUNCTION CALCULATION MEANS — 4 2

DRY ROAD SURFACE MODEL

WET ROAD SURFACE MODEL

SNOW ROAD SURFACE MODEL

ICE ROAD SURFACE MODEL

— 4 1

ROAD SURFACE STATE DETERMINATION MEANS — 4 3

VEHICLE CONTROL APPARATUS — 2 0

FIG. 14

FIG. 15

FIG. 16

$$\longrightarrow \Sigma$$

| | | $Y_{D1}$ | $Y_{D2}$ | $Y_{D3}$ | $Y_{D4}$ | $Y_{D5}$ | $Y_{D6}$ |
|---|---|---|---|---|---|---|---|
| | $Y_{nD1}$ | $\kappa\,(Y_{D1},\,Y_{nD1})$ | $\kappa\,(Y_{D2},\,Y_{nD1})$ | $\kappa\,(Y_{D3},\,Y_{nD1})$ | $\kappa\,(Y_{D4},\,Y_{nD1})$ | $\kappa\,(Y_{D5},\,Y_{nD1})$ | $\kappa\,(Y_{D6},\,Y_{nD1})$ |
| | $Y_{nD2}$ | $\kappa\,(Y_{D1},\,Y_{nD2})$ | $\kappa\,(Y_{D2},\,Y_{nD2})$ | $\kappa\,(Y_{D3},\,Y_{nD2})$ | $\kappa\,(Y_{D4},\,Y_{nD2})$ | $\kappa\,(Y_{D5},\,Y_{nD2})$ | $\kappa\,(Y_{D6},\,Y_{nD2})$ |
| | $Y_{nD3}$ | $\kappa\,(Y_{D1},\,Y_{nD3})$ | $\kappa\,(Y_{D2},\,Y_{nD3})$ | $\kappa\,(Y_{D3},\,Y_{nD3})$ | $\kappa\,(Y_{D4},\,Y_{nD3})$ | $\kappa\,(Y_{D5},\,Y_{nD3})$ | $\kappa\,(Y_{D6},\,Y_{nD3})$ |
| | $Y_{nD4}$ | $\kappa\,(Y_{D1},\,Y_{nD4})$ | $\kappa\,(Y_{D2},\,Y_{nD4})$ | $\kappa\,(Y_{D3},\,Y_{nD4})$ | $\kappa\,(Y_{D4},\,Y_{nD4})$ | $\kappa\,(Y_{D5},\,Y_{nD4})$ | $\kappa\,(Y_{D6},\,Y_{nD4})$ |

$$\downarrow \Sigma$$

EP 3 480 630 A1

FIG. 17

| | | $Y_{A1}$ | $\kappa\,(X_1, Y_{A1})$ | $\kappa\,(X_2, Y_{A1})$ | $\kappa\,(X_3, Y_{A1})$ | $\kappa\,(X_4, Y_{A1})$ | $\kappa\,(X_5, Y_{A1})$ |
| | | $Y_{A2}$ | $\kappa\,(X_1, Y_{A2})$ | $\kappa\,(X_2, Y_{A2})$ | $\kappa\,(X_3, Y_{A2})$ | $\kappa\,(X_4, Y_{A2})$ | $\kappa\,(X_5, Y_{A2})$ |
| | | $Y_{A3}$ | $\kappa\,(X_1, Y_{A3})$ | $\kappa\,(X_2, Y_{A3})$ | $\kappa\,(X_3, Y_{A3})$ | $\kappa\,(X_4, Y_{A3})$ | $\kappa\,(X_5, Y_{A3})$ |
| | | $Y_{A4}$ | $\kappa\,(X_1, Y_{A4})$ | $\kappa\,(X_2, Y_{A4})$ | $\kappa\,(X_3, Y_{A4})$ | $\kappa\,(X_4, Y_{A4})$ | $\kappa\,(X_5, Y_{A4})$ |
| | | | $X_1$ | $X_2$ | $X_3$ | $X_4$ | $X_5$ |

$\Sigma$

$\Sigma$

EP 3 480 630 A1

FIG. 18

$$ START $$

DETECT TIRE VIBRATION AND MEASURE TIRE INNER PRESSURE — S30

$P_{min} \leqq P \leqq P_{Max}?$ — S31

No → STOP ROAD SURFACE DETERMINATION

Yes — S32

DETECT TIME SERIES WAVEFORM OF TIRE VIBRATION

EXTRACT TIME SERIES WAVEFORM OF TIRE VIBRATION FOR EACH TIME WINDOW — S33

CALCULATE FEATURE VECTOR X — S34

CORRECT FEATURE VECTOR X — S35

CALCULATE GA KERNEL $K_A(X, Y)$

A = DRY, WET, SNOW, AND ICE — S36

CALCULATE DISCRIMINANT FUNCTION $f_A$ — S37

DETERMINE ROAD SURFACE STATE — S38

END

FIG. 19

110 : ROAD SURFACE STATE DETERMINATION APPARATUS

111 ACCELERATION SENSOR

114 VIBRATION WAVEFORM DETECTION MEANS

115 REGION SIGNAL EXTRACTION MEANS

112 BRAKING/DRIVING FORCE ESTIMATING MEANS

113 BRAKING/DRIVING FORCE DETERMINATION MEANS

116 BAND VALUE CALCULATION MEANS

117 BAND VALUE CORRECTION MEANS

118 ROAD SURFACE STATE DETERMINATION MEANS

120 VEHICLE CONTROL APPARATUS

FIG. 20

1

11F

11

2

3

FIG. 21

VIBRATION LEVEL[dBG]

FIG. 22A
BAND VALUE RATIO $K_{ij}$

FIG. 22B
CORRECTED VALUE OF BAND VALUE $A_{ij}$

FIG. 23

START

DETECT TIRE VIBRATION
AND ESTIMATE
BRAKING/DRIVING FORCE — S 1 1 0

$-J_{Max} \leqq J \leqq J_{Max}$? — S 1 1 1

No → STOP ROAD SURFACE
DETERMINATION

Yes

DETECT TIME SERIES WAVEFORM
OF TIRE VIBRATION — S 1 1 2

SET EXTRACTION REGIONS
R101 TO R105 — S 1 1 3

CALCULATE BAND
VALUES Aij — S 1 1 4

CORRECT BAND
VALUES Aij — S 1 1 5

$f1 \geqq 0$?
(DETERMINATION OF
INTERPOSED MATTER ON
DEEP ROAD SURFACE) — S 1 1 6

No

Yes

$f2 < 0$?
(DETERMINATION OF
SNOW COVERAGE) — S 1 1 7

No

Yes

S 1 1 8 — $f3 < 0$?
(DETERMINATION OF
WATER FILM)

No

Yes

SNOW-COVERED
ROAD

NOT SNOW ROAD

SHERBET-LIKE SNOW

# FIG. 24

BAND FREQUENCY [kHz]

$f_{jb}$

1

$f_{ja}$

BRAKING/DRIVING FORCE J [N]

# FIG. 25

130 : ROAD SURFACE STATE DETERMINATION APPARATUS

ACCELERATION SENSOR — 111

VIBRATION WAVEFORM DETECTION MEANS — 114

WINDOW MULTIPLYING MEANS — 131

BRAKING/DRIVING FORCE ESTIMATING MEANS — 112

BRAKING/DRIVING FORCE DETERMINATION MEANS — 113

FEATURE VECTOR CALCULATION MEANS — 132

FEATURE VECTOR CORRECTION MEANS — 133

LIKELIHOOD CALCULATION MEANS — 135

IN-ROAD-SURFACE HMM — 134

DRY ROAD SURFACE HMM

WET ROAD SURFACE HMM

SNOW ROAD SURFACE HMM

ICE ROAD SURFACE HMM

OUT-OF-ROAD-SURFACE HMM

VEHICLE CONTROL APPARATUS — 120

ROAD SURFACE STATE DETERMINATION MEANS — 136

FIG. 26

$X_{t1}$    $X_{t2}$    $X_{t3}$    $X_{t4}$

$(X_1)$    $(X_2)$    $(X_3)$    $(X_4)$

FIG. 27

EP 3 480 630 A1

FIG. 28

```
        ┌──────────┐
   ┌───▶│   DRY    │────┐
   │    └──────────┘    │
   │    ┌──────────┐    │
   ├───▶│   WET    │───▶│
   │    └──────────┘    │
start │  ┌──────────┐    │  end
(s1)──┼─▶│  silent  │───▶┼─▶(s7)
   │    └──────────┘    │
   │    ┌──────────┐    │
   ├───▶│   ICE    │───▶│
   │    └──────────┘    │
   │    ┌──────────┐    │
   └───▶│   SNOW   │───▶┘
        └──────────┘
```

(s2)─▶(s3)─▶(s4)─▶(s5)─▶(s6)

FIG. 29

FIG. 30

START

DETECT TIRE VIBRATION
AND ESTIMATE
BRAKING/DRIVING FORCE ⟵ S120

$-J_{Max} \leqq J \leqq J_{Max}$? ⟵ S121

No → STOP ROAD SURFACE DETERMINATION

Yes

DETECT TIME SERIES
WAVEFORM OF TIRE VIBRATION ⟵ S122

EXTRACT TIME SERIES
WAVEFORM OF TIRE VIBRATION
FOR EACH TIME WINDOW ⟵ S123

CALCULATE FEATURE
VECTOR X ⟵ S124

CORRECT FEATURE
VECTOR X ⟵ S125

N = 1

CALCULATE APPEARANCE
PROBABILITY K ⟵ S126

CALCULATE
LIKELIHOOD Z ⟵ S127

HAS CALCULATION
OF LIKELIHOOD
BEEN FINISHED
FOR ALL MODELS? ⟵ S128

No → N = N + 1

Yes

COMPARE LIKELIHOODS
Z1 TO Z5 AND DETERMINE
ROAD SURFACE STATE ⟵ S129

END

# FIG. 31

**140；ROAD SURFACE STATE DETERMINATION APPARATUS**

- 111 ACCELERATION SENSOR
- 114 VIBRATION WAVEFORM DETECTION MEANS
- 131 WINDOW MULTIPLYING MEANS
- 112 BRAKING/DRIVING FORCE ESTIMATING MEANS
- 113 BRAKING/DRIVING FORCE DETERMINATION MEANS
- 132 FEATURE VECTOR CALCULATION MEANS
- 133 FEATURE VECTOR CORRECTION MEANS
- 142 KERNEL FUNCTION CALCULATION MEANS
- 120 VEHICLE CONTROL APPARATUS
- 143 ROAD SURFACE STATE DETERMINATION MEANS
- 141
  - DRY ROAD SURFACE MODEL
  - WET ROAD SURFACE MODEL
  - SNOW ROAD SURFACE MODEL
  - ICE ROAD SURFACE MODEL

# FIG. 32

$a_2$

$C'$

$C$

$a_1$

FIG. 33

FIG. 34

$\longrightarrow \Sigma$

| | | | | | | | |
|---|---|---|---|---|---|---|---|
| | $Y_{nD1}$ | $\kappa\,(Y_{D1},\,Y_{nD1})$ | $\kappa\,(Y_{D2},\,Y_{nD1})$ | $\kappa\,(Y_{D3},\,Y_{nD1})$ | $\kappa\,(Y_{D4},\,Y_{nD1})$ | $\kappa\,(Y_{D5},\,Y_{nD1})$ | $\kappa\,(Y_{D6},\,Y_{nD1})$ |
| | $Y_{nD2}$ | $\kappa\,(Y_{D1},\,Y_{nD2})$ | $\kappa\,(Y_{D2},\,Y_{nD2})$ | $\kappa\,(Y_{D3},\,Y_{nD2})$ | $\kappa\,(Y_{D4},\,Y_{nD2})$ | $\kappa\,(Y_{D5},\,Y_{nD2})$ | $\kappa\,(Y_{D6},\,Y_{nD2})$ |
| | $Y_{nD3}$ | $\kappa\,(Y_{D1},\,Y_{nD3})$ | $\kappa\,(Y_{D2},\,Y_{nD3})$ | $\kappa\,(Y_{D3},\,Y_{nD3})$ | $\kappa\,(Y_{D4},\,Y_{nD3})$ | $\kappa\,(Y_{D5},\,Y_{nD3})$ | $\kappa\,(Y_{D6},\,Y_{nD3})$ |
| | $Y_{nD4}$ | $\kappa\,(Y_{D1},\,Y_{nD4})$ | $\kappa\,(Y_{D2},\,Y_{nD4})$ | $\kappa\,(Y_{D3},\,Y_{nD4})$ | $\kappa\,(Y_{D4},\,Y_{nD4})$ | $\kappa\,(Y_{D5},\,Y_{nD4})$ | $\kappa\,(Y_{D6},\,Y_{nD4})$ |
| | | $Y_{D1}$ | $Y_{D2}$ | $Y_{D3}$ | $Y_{D4}$ | $Y_{D5}$ | $Y_{D6}$ |
| | | | | | | | |

$\Sigma$

EP 3 480 630 A1

# FIG. 35

$$\longrightarrow \Sigma$$

| | | $Y_{A1}$ | $\kappa\,(X_1,Y_{A1})$ | $\kappa\,(X_2,Y_{A1})$ | $\kappa\,(X_3,Y_{A1})$ | $\kappa\,(X_4,Y_{A1})$ | $\kappa\,(X_5,Y_{A1})$ |
|---|---|---|---|---|---|---|---|
| | | $Y_{A2}$ | $\kappa\,(X_1,Y_{A2})$ | $\kappa\,(X_2,Y_{A2})$ | $\kappa\,(X_3,Y_{A2})$ | $\kappa\,(X_4,Y_{A2})$ | $\kappa\,(X_5,Y_{A2})$ |
| | | $Y_{A3}$ | $\kappa\,(X_1,Y_{A3})$ | $\kappa\,(X_2,Y_{A3})$ | $\kappa\,(X_3,Y_{A3})$ | $\kappa\,(X_4,Y_{A3})$ | $\kappa\,(X_5,Y_{A3})$ |
| | | $Y_{A4}$ | $\kappa\,(X_1,Y_{A4})$ | $\kappa\,(X_2,Y_{A4})$ | $\kappa\,(X_3,Y_{A4})$ | $\kappa\,(X_4,Y_{A4})$ | $\kappa\,(X_5,Y_{A4})$ |
| | | | $X_1$ | $X_2$ | $X_3$ | $X_4$ | $X_5$ |

$$\downarrow \Sigma$$

EP 3 480 630 A1

EP 3 480 630 A1

FIG. 36

START

S130
DETECT TIRE VIBRATION AND ESTIMATE BRAKING/DRIVING FORCE

S131
$-J_{Max} \leqq J \leqq J_{Max}$ ?

No → STOP ROAD SURFACE DETERMINATION

Yes

S132
DETECT TIME SERIES WAVEFORM OF TIRE VIBRATION

S133
EXTRACT TIME SERIES WAVEFORM OF TIRE VIBRATION FOR EACH TIME WINDOW

S134
CALCULATE FEATURE VECTOR X

S135
CORRECT FEATURE VECTOR X

S136
CALCULATE GA KERNEL $K_A(X, Y)$

A = DRY, WET, SNOW, AND ICE

S137
CALCULATE DISCRIMINANT FUNCTION $f_A$

S138
DETERMINE ROAD SURFACE STATE

END

51

**EP 3 480 630 A1**

## INTERNATIONAL SEARCH REPORT

International application No.

PCT/JP2017/024014

### A. CLASSIFICATION OF SUBJECT MATTER

*G01W1/00*(2006.01)i, *B60C19/00*(2006.01)i, *B60W40/068*(2012.01)i

According to International Patent Classification (IPC) or to both national classification and IPC

### B. FIELDS SEARCHED

Minimum documentation searched (classification system followed by classification symbols)
G01W1/00, B60C19/00, B60W40/068

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 11-153518 A (Toyota Motor Corp.), 08 June 1999 (08.06.1999), | 1-2,5,9-11, 15 |
| Y | paragraphs [0042] to [0049] (Family: none) | 3,6-8,12-14, 16-18 |
| X | JP 2005-249525 A (Advics Co., Ltd.), 15 September 2005 (15.09.2005), paragraphs [0047] to [0052] (Family: none) | 1-2,4,9-10 |
| Y | JP 2005-345238 A (Bridgestone Corp.), 15 December 2005 (15.12.2005), paragraph [0014] (Family: none) | 3,13 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 September 2017 (04.09.17) | 12 September 2017 (12.09.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2017/024014

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2016-076085 A  (Bridgestone Corp.),<br>12 May 2016 (12.05.2016),<br>paragraphs [0015], [0018] to [0019]<br>& WO 2016/056568 A1 | 6-8,12-14,<br>16-18 |
| A | JP 2005-306160 A  (Bridgestone Corp.),<br>04 November 2005 (04.11.2005),<br>paragraph [0012]<br>(Family: none) | 1-18 |
| A | US 2007/0050121 A1  (AMMON Dieter et al.),<br>01 March 2007 (01.03.2007),<br>paragraphs [0033] to [0035], [0041]<br>& WO 2005/095173 A1     & DE 102004016288 B3 | 1-18 |

Form PCT/ISA/210 (continuation of second sheet) (January 2015)

**EP 3 480 630 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011242303 A
- JP 2010115730 A
- JP 2011140943 A
- JP 2012176779 A